# EUROPEAN PATENT APPLICATION

(11) **EP 4 338 613 A1**
(43) Date of publication of application: **20.03.2024**
(21) Application number: 22807088.4
(22) Date of filing: 28.02.2022
(51) Int. Cl.: A24F 40/40

(54) **POWER SUPPLY UNIT FOR AEROSOL GENERATION DEVICE**

(30) Priority: 10.05.2021 JP 2021079876
(71) Applicant: Japan Tobacco, Inc., Tokyo, 105-6927 (JP)
(72) Inventor: FUJIKI Takashi, Tokyo 130-8603 (JP); KAWANAGO Hiroshi, Tokyo 130-8603 (JP); NAGAHAMA Toru, Tokyo 130-8603 (JP); AOYAMA Tatsunari, Tokyo 130-8603 (JP); YOSHIDA Ryo, Tokyo 130-8603 (JP)
(74) Representative: Hoffmann Eitle
(86) International application number: PCT/JP2022/008368
(87) International publication number: WO 2022/239381

(57) **Abstract**

This non-combustion type inhaler (100) comprises a power supply BAT, a heater connector Cn to which a heater HTR is connected, an MCU 1, a charging IC 2, a receptacle RCP, a power supply line PL connecting an input terminal VBUS of the charging IC 2 to a power supply input terminal V_{BUS} of the receptacle RCP, power supply line protection components (205) provided to the power supply line PL, data lines DL1-DL4 connecting the MCU 1 to a data terminal of the receptacle RCP, and data line protection components (215) provided to the data lines DL1-DL4. The number of power supply line protection components (205) is greater than the number of data line protection components (215).

## Description

### TECHNICAL FIELD

The present invention relates to a power supply unit of an aerosol generation device.

### BACKGROUND ART

Patent Literatures 1 and 2 describe a power supply unit of an aerosol generation device including a receptacle such as a USB.

The receptacle is provided with many terminals in addition to a VBUS terminal that supplies charging power.

On the other hand, in order to safely introduce power supplied from an external power supply via the receptacle into the device, it is preferable to provide a protective component that protects an electronic component in the device when the external power supply is disturbed.

### CITATION LIST

### PATENT LITERATURE

Patent Literature 1: Japanese Patent Application Laid-open publication No. 2020-504599
Patent Literature 2: United States Patent Application Publication No. 2019/0380388 specification

### SUMMARY OF INVENTION

### TECHNICAL PROBLEM

There is room for study on how to connect the protective component to a plurality of terminals provided in the receptacle.

The invention provides a power supply unit of an aerosol generation device capable of stabilizing an operation while preventing an increase in cost and size by connecting an appropriate protective component to a receptacle.

### SOLUTION TO PROBLEM

A power supply unit of an aerosol generation device according to the invention includes:
a power supply;
a heater connector to which a heater configured to heat an aerosol source by consuming power supplied from the power supply is connected;
a controller configured to control supply of the power from the power supply to the heater connector;
a charging IC including an input terminal and a charging terminal connected to the power supply and configured to convert power input to the input terminal and output the power from the charging terminal;
a receptacle including a power supply terminal and a data terminal and electrically connected to an external power supply;
a power supply line connecting the power supply terminal and the input terminal;
a data line connecting the data terminal and the controller;
first protective components provided on the power supply line; and
a second protective component provided on the data line, in which
the number of the first protective components is larger than the number of the second protective component.

### ADVANTAGEOUS EFFECTS OF INVENTION

According to the invention, an operation of a power supply unit of an aerosol generation device can be stabilized while preventing an increase in cost and size of the power supply unit.

### BRIEF DESCRIPTION OF DRAWINGS

[FIG. 1] FIG. 1 is a perspective view of a non-combustion inhaler.
[FIG. 2] FIG. 2 is a perspective view of the non-combustion inhaler in a state where a rod is attached.
[FIG. 3] FIG. 3 is another perspective view of the non-combustion inhaler.
[FIG. 4] FIG. 4 is an exploded perspective view of the non-combustion inhaler.
[FIG. 5] FIG. 5 is a perspective view of an internal unit of the non-combustion inhaler.
[FIG. 6] FIG. 6 is an exploded perspective view of the internal unit in FIG. 5.
[FIG. 7] FIG. 7 is a perspective view of the internal unit from which a power supply and a chassis are detached.
[FIG. 8] FIG. 8 is another perspective view of the internal unit from which the power supply and the chassis are detached.
[FIG. 9] FIG. 9 is a schematic diagram illustrating operation modes of the inhaler.
[FIG. 10] FIG. 10 is a diagram illustrating a schematic configuration of an electric circuit of the internal unit.
[FIG. 11] FIG. 11 is a diagram illustrating an operation of the electric circuit in a sleep mode.
[FIG. 12] FIG. 12 is a diagram illustrating an operation of the electric circuit in an active mode.
[FIG. 13] FIG. 13 is a diagram illustrating an operation of the electric circuit in a heating initial setting mode.
[FIG. 14] FIG. 14 is a diagram illustrating an operation of the electric circuit during heating by a heater in a heating mode.
[FIG. 15] FIG. 15 is a diagram illustrating an operation of the electric circuit when a temperature of the heater is detected in the heating mode.
[FIG. 16] FIG. 16 is a diagram illustrating an operation of the electric circuit in a charging mode.
[FIG. 17] FIG. 17 is a diagram illustrating a protective component facing a line extending from a receptacle and the receptacle.
[FIG. 18] FIG. 18 is a view illustrating a main surface of a receptacle mounting board.
[FIG. 19] FIG. 19 is a view illustrating a secondary surface of the receptacle mounting board.
[FIG. 20] FIG. 20 is a view illustrating a main surface of an MCU mounting board.
[FIG. 21] FIG. 21 is a view illustrating a secondary surface of the MCU mounting board.

### DESCRIPTION OF EMBODIMENTS

Hereinafter, an inhaling system as an embodiment of an aerosol generation device according to the invention will be described with reference to the drawings. The inhaling system includes a non-combustion inhaler 100 (hereinafter, also simply referred to as an "inhaler 100") which is an embodiment of a power supply unit according to the invention, and a rod 500 heated by the inhaler 100. In the following description, a configuration is described as an example in which the inhaler 100 accommodates a heating unit in a detachable manner. However, the heating unit may be detachable from the inhaler 100. For example, a unit in which the rod 500 and the heating unit are integrated may be detachably attached to the inhaler 100. That is, a power supply unit of the aerosol generation device may not include the heating unit as a component. The term "detachable" refers to a mode in which detachment cannot be performed as long as intended use. Alternatively, an induction heating coil provided in the inhaler 100 and a susceptor built in the rod 500 may cooperate to constitute the heating unit.

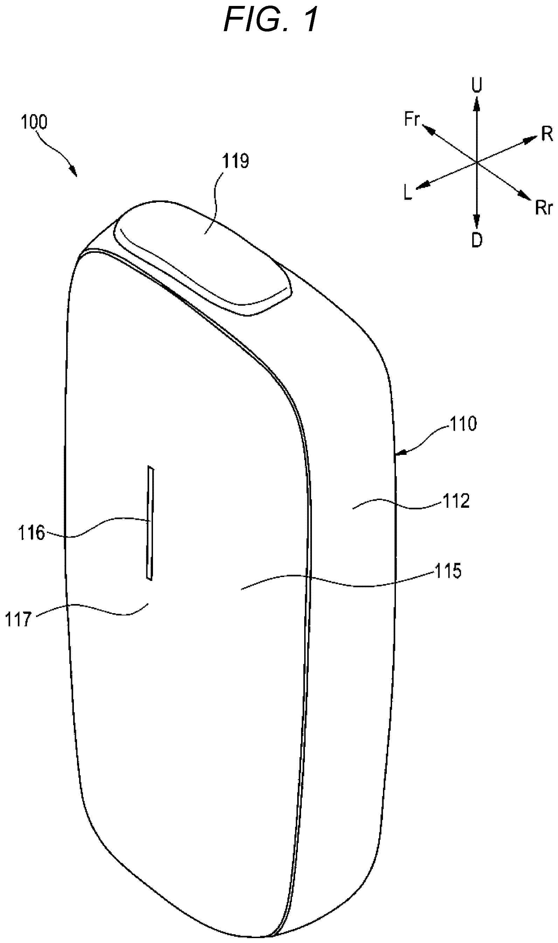

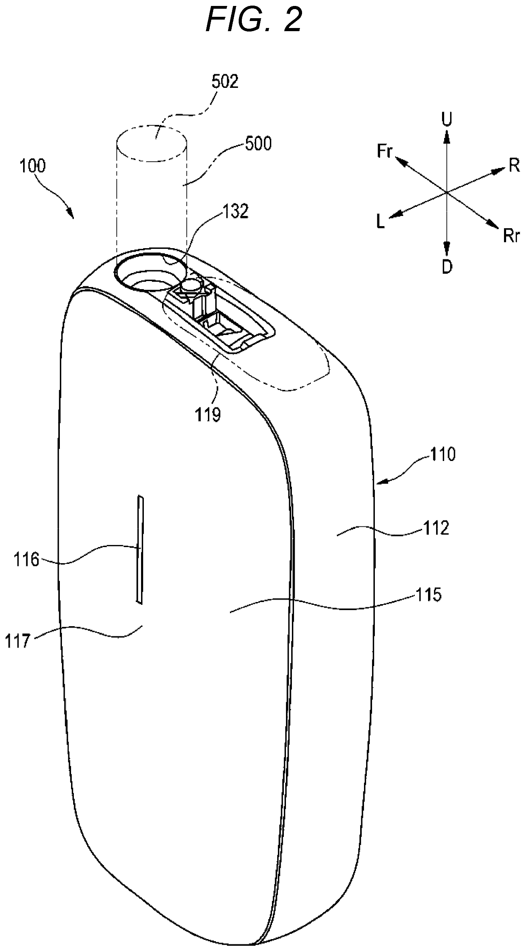

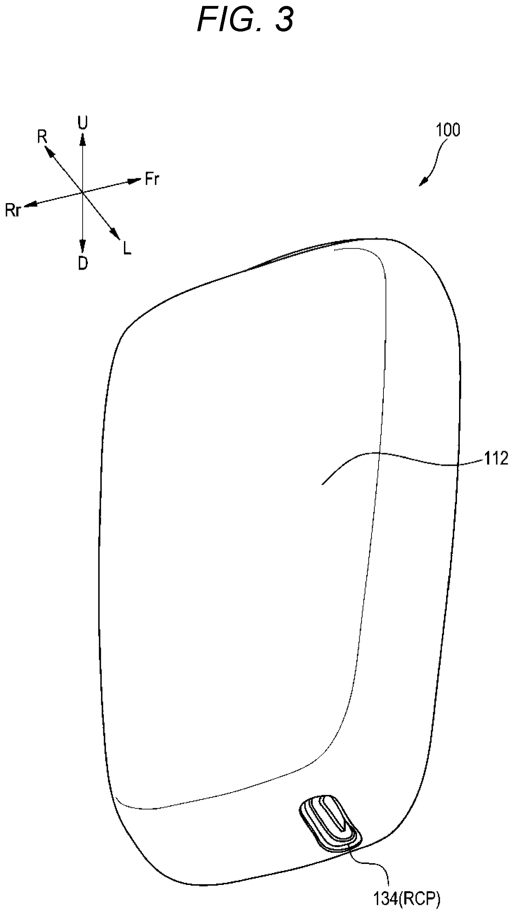

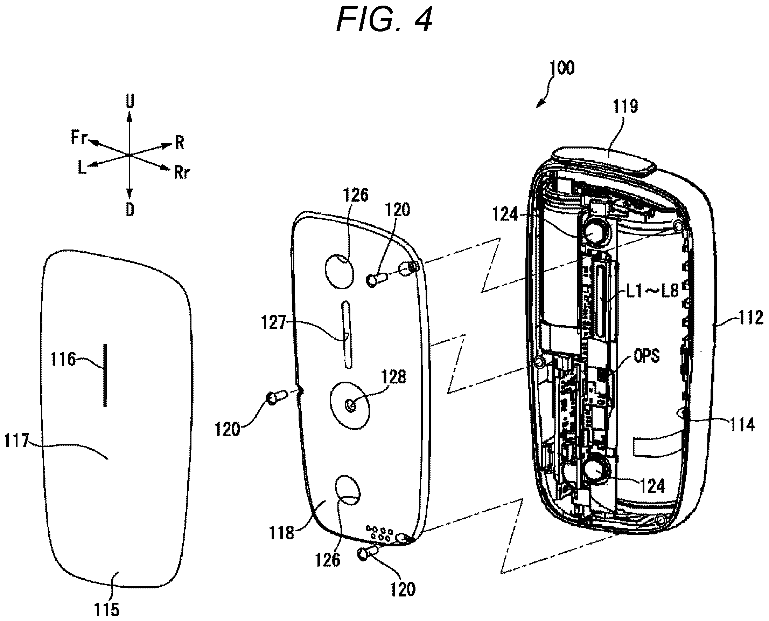

FIG. 1 is a perspective view illustrating an overall configuration of the inhaler 100. FIG. 2 is a perspective view of the inhaler 100 in a state where the rod 500 is attached. FIG. 3 is another perspective view of the inhaler 100. FIG. 4 is an exploded perspective view of the inhaler 100. In the following description, the invention will be described using an orthogonal coordinate system of a three-dimensional space in which three directions orthogonal to one another are defined as a front-rear direction, a left-right direction, and an up-down direction. In the drawings, a front side is denoted by Fr, a rear side is denoted by Rr, a right side is denoted by R, a left side is denoted by L, an upper side is denoted by U, and a lower side is denoted by D.

The inhaler 100 is configured to generate a flavor-containing aerosol by heating an elongated substantially cylindrical rod 500 (see FIG. 2) as an example of a flavor component generation base material including a filler containing an aerosol source and a flavor source.

### <Flavor Component Generation Base Material (Rod)>

The rod 500 includes a filler that is heated at a predetermined temperature and contains an aerosol source that generates aerosol.

The type of aerosol source is not particularly limited, and an extract substance from various natural products and/or a constituent component thereof can be selected depending on an application. The aerosol source may be a solid, or may be, for example, a polyhydric alcohol such as glycerin or propylene glycol or a liquid such as water. The aerosol source may include flavor sources such as tobacco raw materials for releasing flavor component and extract derived from tobacco raw materials by heating. The gas to which the flavor component is added is not limited to the aerosol, and for example, invisible steam may be generated.

The filler of the rod 500 may contain cut tobacco as the flavor source. Materials for the cut tobacco are not particularly limited, and known materials such as lamina and backbone can be used. The filler may contain one kind or two or more kinds of fragrance. The type of the fragrance is not particularly limited, and is preferably menthol from the viewpoint of imparting good taste. The flavor source may contain a plant other than tobacco (for example, mint, Chinese medicine, or herb). Depending on the application, the rod 500 may not contain a flavor source

### <Overall Configuration of Non-combustion Inhaler>

Next, the overall configuration of the inhaler 100 will be described with reference to FIGS. 1 to 4.

The inhaler 100 includes a substantially rectangular parallelepiped case 110 having a front surface, a rear surface, a left surface, a right surface, an upper surface, and a lower surface. The case 110 includes a bottomed tubular case body 112 in which the front surface, the rear surface, the upper surface, the lower surface, and the right surface are integrally formed, an outer panel 115 and an inner panel 118 that seal an opening 114 (see FIG. 4) of the case body 112 to form the left surface, and a slider 119.

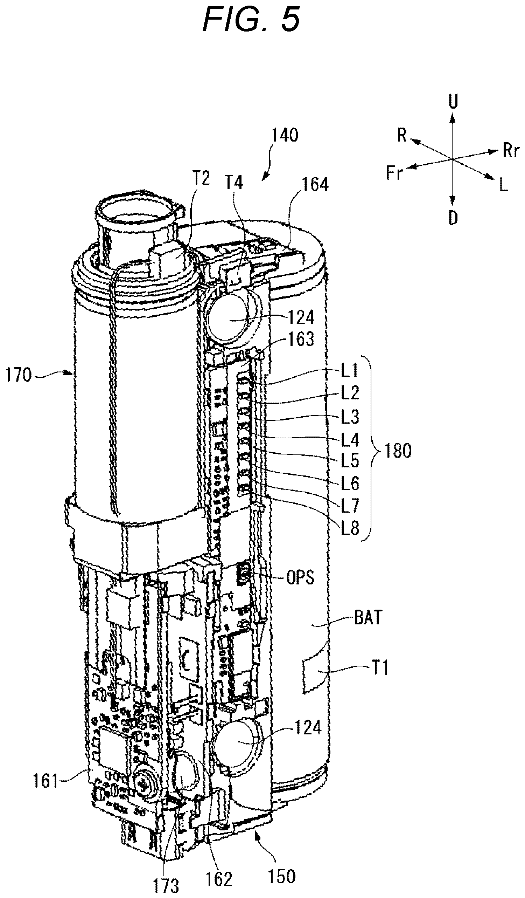

The inner panel 118 is fixed to the case body 112 with bolts 120. The outer panel 115 is fixed to the case body 112 so as to cover an outer surface of the inner panel 118 by magnets 124 held by a chassis 150 (to be described later) (see FIG. 5) that is housed in the case body 112. The outer panel 115 is fixed by the magnets 124, so that a user can replace the outer panel 115 as desired.

The inner panel 118 is provided with two through holes 126 through which the magnets 124 pass. The inner panel 118 is further provided with a vertically long hole 127 and a circular round hole 128 between the two vertically disposed through holes 126. The long hole 127 transmits light emitted from eight LEDs (Light Emitting Diodes) L1 to L8 built in the case body 112. A button-type operation switch OPS built in the case body 112 penetrates the round hole 128. Accordingly, the user can detect the light emitted from the eight LEDs L1 to L8 through a LED window 116 of the outer panel 115. The user can press down the operation switch OPS via a pressing portion 117 of the outer panel 115.

As illustrated in FIG. 2, an opening 132 into which the rod 500 can be inserted is provided on an upper surface of the case body 112. The slider 119 is coupled to the case body 112 to be movable in the front-rear direction between a position where the opening 132 is closed (see FIG. 1) and a position where the opening 132 is opened (see FIG. 2). In FIG. 2, in order to facilitate understanding, the slider 119 is made transparent, and only an outer shape of the slider 119 is indicated by a two-dot chain line.

The operation switch OPS is used to perform various operations of the inhaler 100. For example, the user operates the operation switch OPS via the pressing portion 117 in a state where the rod 500 is inserted into the opening 132 and attached as illustrated in FIG. 2. Accordingly, a heating unit 170 (see FIG. 5) heats the rod 500 without burning the rod 500. When the rod 500 is heated, an aerosol is generated from the aerosol source contained in the rod 500, and the flavor of the flavor source contained in the rod 500 is added to the aerosol. The user can inhale the aerosol containing the flavor by holding a mouthpiece 502 of the rod 500 protruding from the opening 132 to inhale.

As illustrated in FIG. 3, a charging terminal 134 that is electrically connected to an external power supply such as an outlet or a mobile battery and receives supply of the power is provided on a lower surface of the case body 112. In the present embodiment, the charging terminal 134 is a USB (Universal Serial Bus) Type-C receptacle, but is not limited thereto. Hereinafter, the charging terminal 134 will also be referred to as a receptacle RCP.

The charging terminal 134 may include, for example, a power receiving coil, and may wirelessly receive power transmitted from the external power supply. In this case, a method of power transfer (Wireless Power Transfer) may be an electromagnetic induction type, a magnetic resonance type, or a combination of the electromagnetic induction type and the magnetic resonance type. As another example, the charging terminal 134 may be connectable to various USB terminals or the like, and may include the above-described power receiving coil.

A configuration of the inhaler 100 illustrated in FIGS. 1 to 4 is merely an example. The inhaler 100 can be implemented in various forms in which the rod 500 is held and applied with an action such as heating to generate a gas to which a flavor component is added from the rod 500, and the user can inhale the generated gas.

### <Internal Configuration of Non-combustion Inhaler>

An internal unit 140 of the inhaler 100 will be described with reference to FIGS. 5 to 8.

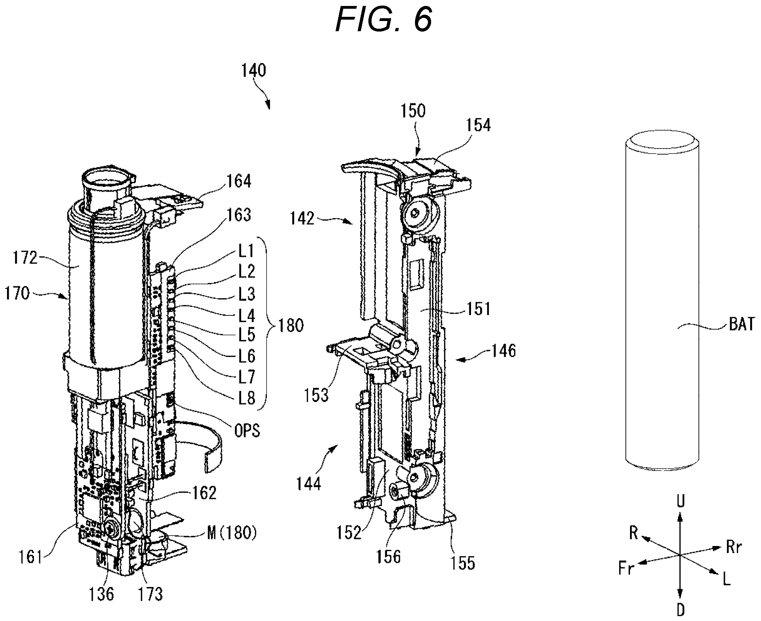

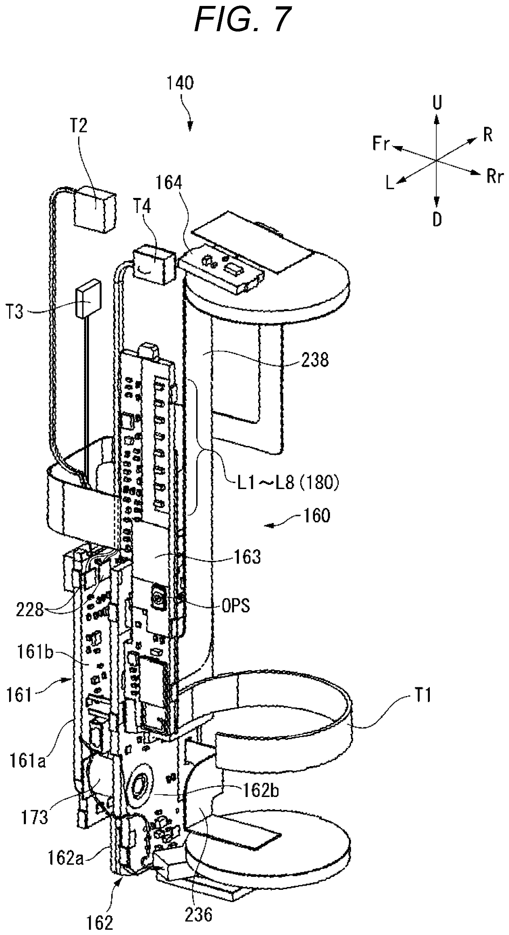

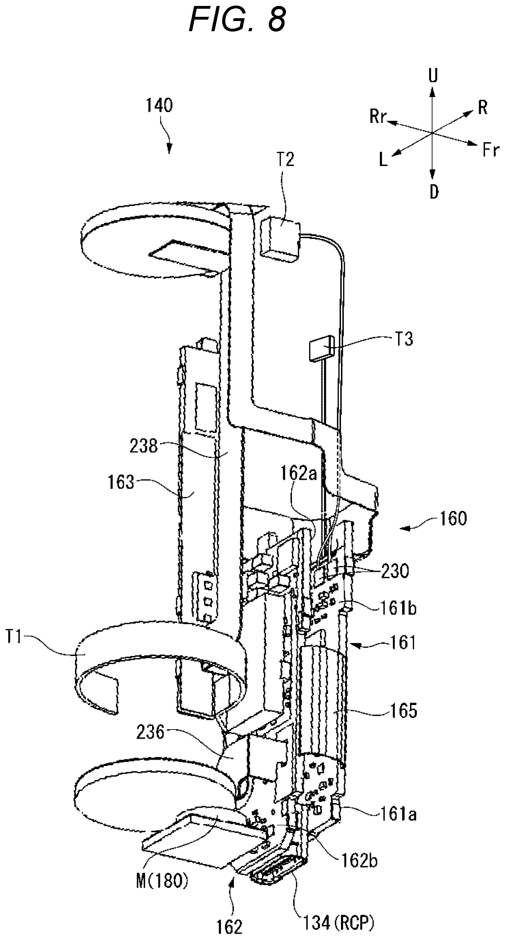

FIG. 5 is a perspective view of the internal unit 140 of the inhaler 100. FIG. 6 is an exploded perspective view of the internal unit 140 in FIG. 5. FIG. 7 is a perspective view of the internal unit 140 from which a power supply BAT and the chassis 150 are detached. FIG. 8 is another perspective view of the internal unit 140 from which the power supply BAT and the chassis 150 are detached.

The internal unit 140 accommodated in an internal space of the case 110 includes the chassis 150, the power supply BAT, a circuit unit 160, the heating unit 170, a notification unit 180, and various sensors.

The chassis 150 includes a plate-shaped chassis body 151 that is disposed substantially in a center of the internal space of the case 110 in the front-rear direction and that extends in the up-down direction and the front-rear direction, a plate-shaped front-rear partition wall 152 that is disposed substantially in a center of the internal space of the case 110 in the front-rear direction and that extends in the up-down direction and the left-right direction, a plate-shaped up-down partition wall 153 that extends forward from substantially a center of the front-rear partition wall 152 in the up-down direction, a plate-shaped chassis upper wall 154 that extends rearward from upper edge portions of the front-rear partition wall 152 and the chassis body 151, and a plate-shaped chassis lower wall 155 that extends rearward from lower edge portions of the front-rear partition wall 152 and the chassis body 151. A left surface of the chassis body 151 is covered with the inner panel 118 and the outer panel 115 of the case 110 described above.

By the chassis 150, a heating unit accommodating region 142 is defined and formed in a front upper portion of the internal space of the case 110, a board accommodating region 144 is defined and formed in a front lower portion thereof, and a power supply accommodating space 146 is defined and formed in a rear portion thereof in the up-down direction.

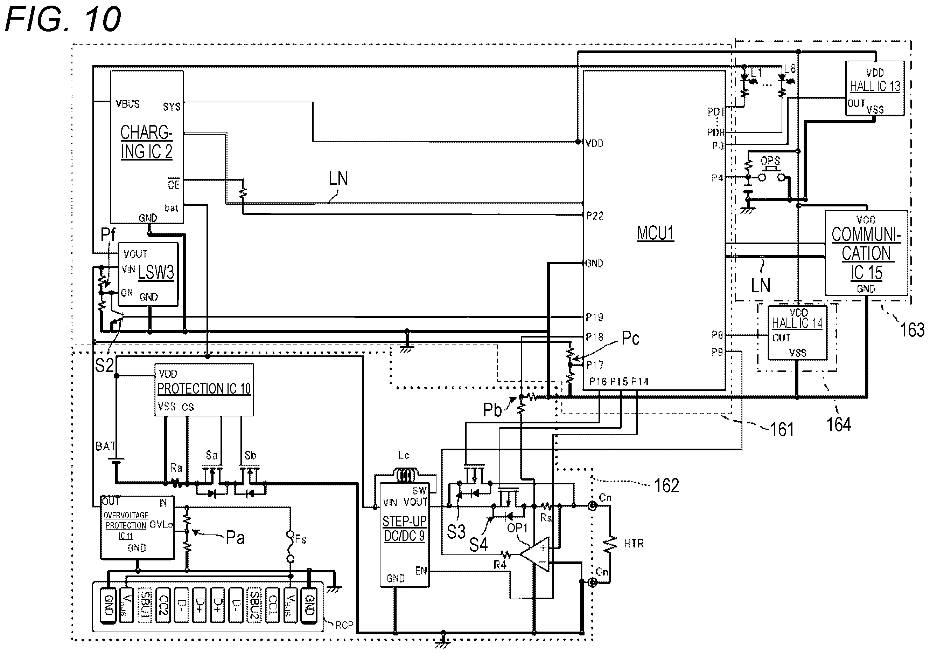

The heating unit 170 accommodated in the heating unit accommodating region 142 is constituted by a plurality of tubular members, and these tubular members are concentrically disposed to form a tubular body as a whole. The heating unit 170 includes a rod accommodating unit 172 capable of accommodating a portion of the rod 500 therein, and a heater HTR (see FIGS. 10 to 16) that heats the rod 500 from an outer circumference or a center of the rod 500. Preferably, a surface of the rod accommodating unit 172 is insulated from the heater HTR by forming the rod accommodating unit 172 from a heat-insulating material or providing a heat-insulating material inside the rod accommodating unit 172. The heater HTR may be any element capable of heating the rod 500. The heater HTR is, for example, a heating element. Examples of the heating element include a heating resistor, a ceramic heater, and an induction heating heater. As the heater HTR, for example, a heater having a PTC (Positive Temperature Coefficient) characteristic in which a resistance value increases with an increase in temperature is preferably used. Alternatively, a heater HTR having an NTC (Negative Temperature Coefficient) characteristic in which the resistance value decreases with an increase in temperature may be used. The heating unit 170 has a function of defining a flow path of air supplied to the rod 500 and a function of heating the rod 500. The case 110 is formed with a vent (not illustrated) that allows air to flow, and is configured to allow air to flow into the heating unit 170.

The power supply BAT accommodated in the power supply accommodating space 146 is a rechargeable secondary battery, an electric double layer capacitor, or the like, and is preferably a lithium-ion secondary battery. An electrolyte of the power supply BAT may be implemented by one or a combination of a gel electrolyte, an electrolytic solution, a solid electrolyte, and an ionic liquid.

The notification unit 180 notifies various kinds of information such as an SOC (State Of Charge) indicating a charging state of the power supply BAT, a preheating time at the time of inhaling, and an inhaling available period. The notification unit 180 according to the present embodiment includes the eight LEDs L1 to L8 and a vibration motor M. The notification unit 180 may be formed by light-emitting elements such as the LEDs L1 to L8, may be formed by vibration elements such as the vibration motor M, or may be formed by sound output elements. The notification unit 180 may be a combination of two or more elements among the light-emitting elements, the vibration elements, and the sound output elements.

The various sensors include an intake sensor that detects a puff operation (an inhaling operation) of the user, a power supply temperature sensor that detects a temperature of the power supply BAT, a heater temperature sensor that detects a temperature of the heater HTR, a case temperature sensor that detects a temperature of the case 110, a cover position sensor that detects a position of the slider 119, a panel detection sensor that detects attachment or detachment of the outer panel 115, and the like.

The intake sensor mainly includes, for example, a thermistor T2 disposed in the vicinity of the opening 132. The power supply temperature sensor mainly includes, for example, a thermistor T1 disposed in the vicinity of the power supply BAT. The heater temperature sensor mainly includes, for example, a thermistor T3 disposed in the vicinity of the heater HTR. As described above, the rod accommodating unit 172 is preferably insulated from the heater HTR. In this case, it is preferable that the thermistor T3 is in contact with or close to the heater HTR inside the rod accommodating unit 172. When the heater HTR has the PTC characteristic or the NTC characteristic, the heater HTR may be used for the heater temperature sensor. The case temperature sensor mainly includes, for example, a thermistor T4 disposed in the vicinity of a left surface of the case 110. The cover position sensor mainly includes a Hall IC 14 (see FIGS. 10 to 16) including a Hall element disposed in the vicinity of the slider 119. The panel detection sensor mainly includes a Hall IC 13 (see FIGS. 10 to 16) including a Hall element disposed in the vicinity of an inner surface of the inner panel 118.

The circuit unit 160 includes four circuit boards, a plurality of ICs (Integrated Circuits), and a plurality of elements. The four circuit boards include an MCU (Micro Controller Unit) mounting board 161 on which an MCU 1 and a charging IC 2 (to be described later) are disposed, a receptacle mounting board 162 on which the charging terminal 134 is mainly disposed, an LED mounting board 163 on which the operation switch OPS, LEDs L1 to L8, and a communication IC 15 to be described later are disposed, and a Hall IC mounting board 164 on which the Hall IC 14 (to be described later) including the Hall element constituting the cover position sensor is disposed.

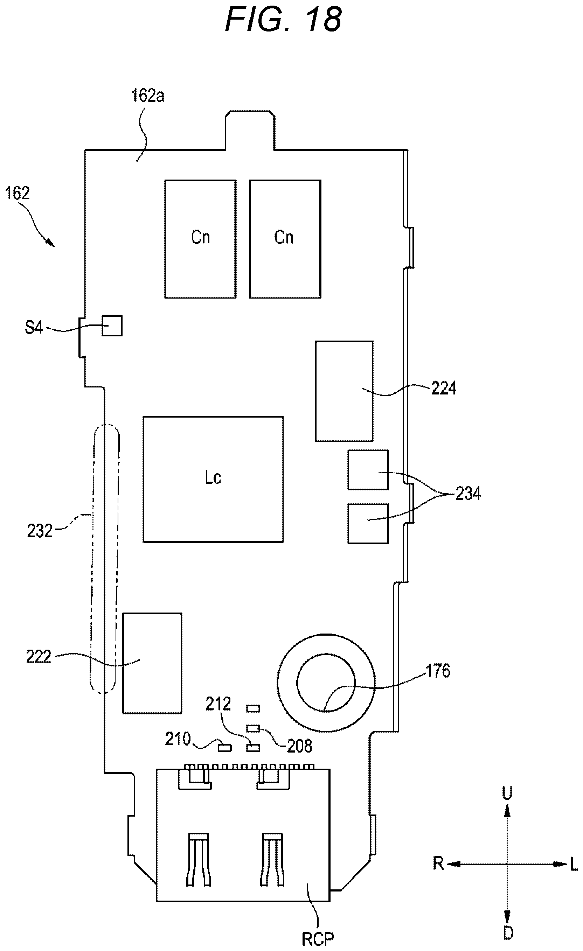

The MCU mounting board 161 and the receptacle mounting board 162 are disposed in parallel to each other in the board accommodating region 144. Specifically, an element disposition surface of the MCU mounting board 161 and an element disposition surface of the receptacle mounting board 162 are disposed along the left-right direction and the up-down direction, respectively, and the MCU mounting board 161 is disposed in front of the receptacle mounting board 162. The MCU mounting board 161 and the receptacle mounting board 162 are provided with openings 175 and 176 (see FIGS. 18 to 21), respectively. The MCU mounting board 161 and the receptacle mounting board 162 are fastened to a board fixing unit 156 of the front-rear partition wall 152 with bolts 136 in a state where a cylindrical spacer 173 is interposed between peripheral edge portions of the openings 175 and 176. That is, the spacer 173 is a fixing member that fixes positions of the MCU mounting board 161 and the receptacle mounting board 162 inside the case 110, and mechanically connects the MCU mounting board 161 and the receptacle mounting board 162. Accordingly, the MCU mounting board 161 and the receptacle mounting board 162 come into contact with each other, and it is possible to prevent the occurrence of a short-circuit current therebetween. The spacer 173 has conductivity, and grounds of the MCU mounting board 161 and the receptacle mounting board 162 are connected via the spacer 173. As a result, ground potentials of the MCU mounting board 161 and the receptacle mounting board 162 can be equalized, and supply of charging power and operating power between the MCU mounting board 161 and the receptacle mounting board 162 and communication therebetween can be stabilized.

For the sake of convenience, assuming that the surfaces of the MCU mounting board 161 and the receptacle mounting board 162 facing the front are main surfaces 161a and 162a, respectively, and surfaces opposite to the main surfaces 161a and 162a are secondary surfaces 161b and 162b, respectively, the secondary surface 161b of the MCU mounting board 161 and the main surface 162a of the receptacle mounting board 162 face each other with a predetermined gap therebetween. The main surface 161a of the MCU mounting board 161 faces the front surface of the case 110, and the secondary surface 162b of the receptacle mounting board 162 faces the front-rear partition wall 152 of the chassis 150. The MCU mounting board 161 and the receptacle mounting board 162 are electrically connected via a flexible interconnect board 165. Elements and ICs mounted on the MCU mounting board 161 and the receptacle mounting board 162 will be described later.

The LED mounting board 163 is disposed on a left side surface of the chassis body 151 and between the two magnets 124 disposed vertically. An element disposition surface of the LED mounting board 163 is disposed along the up-down direction and the front-rear direction. In other words, the element disposition surfaces of the MCU mounting board 161 and the receptacle mounting board 162 are orthogonal to the element disposition surface of the LED mounting board 163. In this way, the element disposition surfaces of the MCU mounting board 161 and the receptacle mounting board 162 and the element disposition surface of the LED mounting board 163 are not limited to being orthogonal to each other, and preferably intersect (are not parallel to) each other. The LEDs L1 to L8 and the vibration motor M constituting the notification unit 180 are fixed to a lower surface of the chassis lower wall 155 and electrically connected to the MCU mounting board 161.

The Hall IC mounting board 164 is disposed on an upper surface of the chassis upper wall 154.

### <Operation Modes of Inhaler>

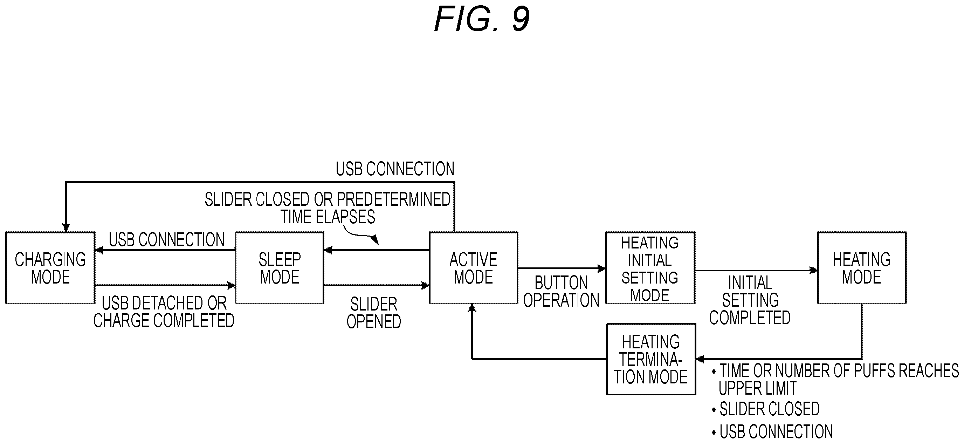

FIG. 9 is a schematic diagram illustrating operation modes of the inhaler 100. As illustrated in FIG. 9, the operation modes of the inhaler 100 include a charging mode, a sleep mode, an active mode, a heating initial setting mode, a heating mode, and a heating termination mode.

The sleep mode is a mode in which power supply to an electronic component mainly required for heating control of the heater HTR is stopped to save power.

The active mode is a mode in which most of the functions other than the heating control of the heater HTR are enabled. When the slider 119 is opened in a state where the inhaler 100 is operating in the sleep mode, the operation mode is switched to the active mode. When the slider 119 is closed or a non-operation time of the operation switch OPS reaches a predetermined time in a state where the inhaler 100 is operating in the active mode, the operation mode is switched to the sleep mode.

The heating initial setting mode is a mode in which an initial setting such as a control parameter for starting the heating control of the heater HTR is performed. When an operation of the operation switch OPS is detected in a state where the inhaler 100 is operating in the active mode, the operation mode is switched to the heating initial setting mode, and when the initial setting is terminated, the operation mode is switched to the heating mode.

The heating mode is a mode in which the heating control of the heater HTR (heating control for aerosol generation and heating control for temperature detection) is executed. When the operation mode is switched to the heating mode, the inhaler 100 starts the heating control of the heater HTR.

The heating termination mode is a mode in which a termination process (a storage process of heating history and the like) of the heating control of the heater HTR is executed. In a state where the inhaler 100 is operating in the heating mode, when an energization time to the heater HTR or the number of times of inhalation by the user reaches an upper limit or the slider 119 is closed, the operation mode is switched to the heating termination mode, and when the termination process ends, the operation mode is switched to the active mode. When USB connection is established in a state where the inhaler 100 is operating in the heating mode, the operation mode is switched to the heating termination mode, and when the termination process ends, the operation mode is switched to the charging mode. As illustrated in FIG. 9, in this case, the operation mode may be switched to the active mode before the operation mode is switched to the charging mode. In other words, when the USB connection is established in a state where the inhaler 100 is operating in the heating mode, the operation mode may be switched in the order of the heating termination mode, the active mode, and the charging mode.

The charging mode is a mode in which the power supply BAT is charged with power supplied from an external power supply connected to the receptacle RCP. When the external power supply is connected (USB connection) to the receptacle RCP in a state where the inhaler 100 is operating in the sleep mode or the active mode, the operation mode is switched to the charging mode. When the charging of the power supply BAT is completed or the connection between the receptacle RCP and the external power supply is released in a state where the inhaler 100 is operating in the charging mode, the operation mode is switched to the sleep mode.

### <Outline of Circuit of Internal Unit>

FIG. 10 is a diagram illustrating a schematic configuration of an electric circuit of the internal unit 140. In FIG. 10, only main elements and ICs are illustrated.

A wiring indicated by a thick solid line in FIG. 10 is a wiring having the same potential as a reference potential (a ground potential) of the internal unit 140 (a wiring connected to a ground provided in the internal unit 140), and this wiring is hereinafter referred to as a ground line. In FIG. 10, an electronic component in which a plurality of circuit elements are chipped is indicated by a rectangle, and symbols of various terminals are written inside the rectangle. Power supply terminals VCC and power supply terminals VDD mounted on the chips indicate power supply terminals on a high-potential side. Power supply terminals VSS and ground terminals GND mounted on the chips indicate power supply terminals on a low-potential side (a reference potential side). In the chipped electronic component, a power supply voltage is a difference between a potential of the power supply terminal on the high-potential side and a potential of the power supply terminal on the low-potential side. The chipped electronic component uses the power supply voltage to execute various functions.

The MCU mounting board 161 is provided with, as main electronic components, the MCU 1 which integrally controls the overall inhaler 100, the charging IC 2 which executes charging control of the power supply BAT, a load switch (hereinafter, LSW) 3 configured by combining a capacitor, a resistor, a transistor, and the like, and a voltage dividing circuit Pc for detecting USB connection.

The ground terminal GND of each of the charging IC 2 and the LSW 3 is connected to the ground line.

The LED mounting board 163 is provided with, as main electronic components, the Hall IC 13 including the Hall element constituting the panel detection sensor, the LEDs L1 to L8, the operation switch OPS, and the communication IC 15. The communication IC 15 is a communication module for communicating with an electronic device such as a smartphone. The power supply terminal VSS of the Hall IC 13 and the ground terminal GND of the communication IC 15 are connected to the ground line. The communication IC 15 and the MCU 1 are capable of communicating with each other via a communication line LN. One end of the operation switch OPS is connected to the ground line, and the other end of the operation switch OPS is connected to a terminal P4 of the MCU 1.

The receptacle mounting board 162 is provided with, as main electronic components, a power supply connector electrically connected to the power supply BAT (illustrated as the power supply BAT connected to the power supply connector in the drawing), a step-up DC/DC converter 9 (illustrated as a step-up DC/DC 9 in the drawing), a protection IC 10, an overvoltage protection IC 11, the receptacle RCP, switches S3 and S4 formed of MOSFETs, an operational amplifier OP1, and a pair of heater connectors Cn (a positive electrode side and a negative electrode side) electrically connected to the heater HTR.

The two ground terminals GND of the receptacle RCP, the ground terminal GND of the step-up DC/DC converter 9, the power supply terminal VSS of the protection IC 10, the ground terminal GND of the overvoltage protection IC 11, and a negative power supply terminal of the operational amplifier OP1 are connected to the ground line.

The Hall IC mounting board 164 is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects the opening and closing of the slider 119 based on a signal input to the terminal P8.

### <Details of Circuit of Internal Unit>

Connection relation between the electronic components and the like will be described below with reference to FIG. 10.

Two power supply input terminals V_{BUS} of the receptacle RCP are connected to an input terminal IN of the overvoltage protection IC 11 via a protective element (to be described later) such as a fuse Fs. When a USB plug is connected to the receptacle RCP and a USB cable including the USB plug is connected to the external power supply, a USB voltage V_{USB} is supplied to the two power supply input terminals V_{BUS} of the receptacle RCP.

One end of a voltage dividing circuit Pa including a series circuit of two resistors is connected to the input terminal IN of the overvoltage protection IC 11. The other end of the voltage dividing circuit Pa is connected to the ground line. A connection point of the two resistors constituting the voltage dividing circuit Pa is connected to a voltage detection terminal OVLo of the overvoltage protection IC 11. In a state where a voltage input to the voltage detection terminal OVLo is less than a threshold, the overvoltage protection IC 11 outputs a voltage input to the input terminal IN from the output terminal OUT. When the voltage input to the voltage detection terminal OVLo is equal to or higher than the threshold (overvoltage), the overvoltage protection IC 11 stops the voltage output from the output terminal OUT (disconnects electrical connection between the LSW3 and the receptacle RCP), so that the electronic components downstream of the overvoltage protection IC 11 are protected. The output terminal OUT of the overvoltage protection IC 11 is connected to an input terminal VIN of the LSW3 and one end of the voltage dividing circuit Pc (a series circuit of two resistors) connected to the MCU 1. The other end of the voltage dividing circuit Pc is connected to the ground line. A connection point of the two resistors constituting the voltage dividing circuit Pc is connected to a terminal P17 of the MCU 1.

One end of a voltage dividing circuit Pf including a series circuit of two resistors is connected to the input terminal VIN of the LSW3. The other end of the voltage dividing circuit Pf is connected to the ground line. A connection point of the two resistors constituting the voltage dividing circuit Pf is connected to a control terminal ON of the LSW3. A collector terminal of a bipolar transistor S2 is connected to the control terminal ON of the LSW3. An emitter terminal of the bipolar transistor S2 is connected to the ground line. A base terminal of the bipolar transistor S2 is connected to a terminal P19 of the MCU 1. When a signal input to the control terminal ON is at a high level, the LSW3 outputs, from an output terminal VOUT, a voltage input to the input terminal VIN. The output terminal VOUT of the LSW 3 is connected to an input terminal VBUS of the charging IC 2 and an anode of each of the LEDs L1 to L8.

While the USB connection is not established, the MCU 1 turns on the bipolar transistor S2. Accordingly, since the control terminal ON of the LSW3 is connected to the ground line via the bipolar transistor S2, a low-level signal is input to the control terminal ON of the LSW3.

When the USB connection is established, the MCU 1 turns off the bipolar transistor S2 connected to the LSW3. When the bipolar transistor S2 is turned off, the USB voltage V_{USB} obtained by dividing the voltage by the voltage dividing circuit Pf is input to the control terminal ON of the LSW3. Therefore, when the USB connection is established and the bipolar transistor S2 is turned off, a high-level signal is input to the control terminal ON of the LSW3. Accordingly, the LSW3 outputs, from the output terminal VOUT, the USB voltage V_{USB} supplied from the USB cable. Even when the USB connection is established in a state where the bipolar transistor S2 is not turned off, since the control terminal ON of the LSW 3 is connected to the ground line via the bipolar transistor S2, a low-level signal continues to be input to the control terminal ON of the LSW 3 unless the MCU 1 turns off the bipolar transistor S2.

A positive electrode terminal of the power supply BAT is connected to the power supply terminal VDD of the protection IC 10, the input terminal VIN of the step-up DC/DC converter 9, and a charging terminal bat of the charging IC 2. Therefore, the power supply voltage V_{BAT} of the power supply BAT is supplied to the protection IC 10, the charging IC 2, and the step-up DC/DC converter 9. A resistor Ra, a switch Sa formed of a MOSFET, and a switch Sb formed of a MOSFET are connected in series in this order to a negative electrode terminal of the power supply BAT. A current detection terminal CS of the protection IC 10 is connected to a connection point of the resistor Ra and the switch Sa. Control terminals of the switches Sa and Sb are connected to the protection IC 10.

The protection IC 10 acquires a value of a current flowing through the resistor Ra during charging and discharging of the power supply BAT from a voltage input to the current detection terminal CS. When the value of the current becomes excessive (in a case of overcurrent), the protection IC 10 controls opening and closing of the switch Sa and the switch Sb to stop charging or discharging the power supply BAT, thereby protecting the power supply BAT. More specifically, when the excessive value of the current is acquired during charging of the power supply BAT, the protection IC 10 turns off the switch Sb to stop charging the power supply BAT. When the excessive value of the current is acquired during discharging of the power supply BAT, the protection IC 10 turns off the switch Sa to stop discharging the power supply BAT. When a voltage value of the power supply BAT is abnormal (overcharge or overvoltage) from the voltage input to the power supply terminal VDD, the protection IC 10 controls opening and closing of the switch Sa and the switch Sb to stop charging or discharging the power supply BAT, thereby protecting the power supply BAT. More specifically, when overcharge of the power supply BAT is detected, the protection IC 10 turns off the switch Sb to stop charging the power supply BAT. When over-discharge of the power supply BAT is detected, the protection IC 10 turns off the switch Sa to stop discharging the power supply BAT.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 executes on/off control of a built-in transistor connected to the switching terminal SW to step up the input voltage and output the voltage from the output terminal VOUT. The input terminal VIN of the step-up DC/DC converter 9 constitutes a power supply terminal on the high-potential side of the step-up DC/DC converter 9. The step-up DC/DC converter 9 performs a step-up operation when a signal input to an enable terminal EN is at a high level. In a USB-connected state, the signal input to the enable terminal EN of the step-up DC/DC converter 9 may be controlled to be low level by the MCU 1. Alternatively, in the USB-connected state, the MCU 1 does not control the signal input to the enable terminal EN of the step-up DC/DC converter 9, so that a potential of the enable terminal EN may be indefinite.

A source terminal of a switch S4 formed of a P-channel MOSFET is connected to the output terminal VOUT of the step-up DC/DC converter 9. A gate terminal of the switch S4 is connected to a terminal P15 of the MCU 1. One end of the resistor Rs is connected to a drain terminal of the switch S4. The other end of the resistor Rs is connected to the heater connector Cn on the positive electrode side connected to one end of the heater HTR. A connection point of the switch S4 and the resistor Rs is connected to a voltage dividing circuit Pb including two resistors. A connection point of the two resistors constituting the voltage dividing circuit Pb is connected to a terminal P18 of the MCU 1. The connection point of the switch S4 and the resistor Rs is further connected to a positive power supply terminal of the operational amplifier OP1.

A source terminal of the switch S3 formed of a P-channel MOSFET is connected to a connection line between the output terminal VOUT of the step-up DC/DC converter 9 and the source terminal of the switch S4. A gate terminal of the switch S3 is connected to a terminal P16 of the MCU 1. A drain terminal of the switch S3 is connected to a connection line between the resistor Rs and the heater connector Cn on the positive electrode side. Therefore, a circuit including the switch S3 and a circuit including the switch S4 and the resistor Rs are connected in parallel between the output terminal VOUT of the step-up DC/DC converter 9 and the positive electrode side of the heater connector Cn. Since the circuit including the switch S3 does not include a resistor, the circuit is a circuit having a lower resistance than the circuit including the switch S4 and the resistor Rs.

A terminal P14 of the MCU 1 is connected to the enable terminal EN of the step-up DC/DC converter 9.

A non-inverting input terminal of the operational amplifier OP 1 is connected to a connection line between the resistor Rs and the heater connector Cn on the positive electrode side. An inverting input terminal of the operational amplifier OP1 is connected to the ground line and the heater connector Cn on the negative electrode side connected to the other end of the heater HTR. One end of a resistor R4 is connected to an output terminal of the operational amplifier OP 1. The other end of the resistor R4 is connected to a terminal P9 of the MCU 1.

The input terminal VBUS of the charging IC 2 is connected to an anode of each of the LEDs L1 to L8. Cathodes of the LEDs L1 to L8 are connected to control terminals PD1 to PD8 of the MCU 1 via resistors for current limitation, respectively. That is, the LEDs L1 to L8 are connected in parallel to the input terminal VBUS. The LEDs L1 to L8 are operable by the USB voltage V_{USB} supplied from the USB cable connected to the receptacle RCP and a voltage supplied from the power supply BAT through the charging IC 2. Transistors (switching elements) connected to the control terminals PD1 to PD8 and the ground terminal GND are built in the MCU 1. The MCU 1 turns on the transistor connected to the control terminal PD1 to energize the LED L1 to turn on the LED L1, and turns off the transistor connected to the control terminal PD1 to turn off the LED L1. By switching on and off the transistor connected to the control terminal PD1 at high speed, luminance and a light emission pattern of the LED L1 can be dynamically controlled. Similarly, lighting of the LEDs L2 to L8 is controlled by the MCU 1.

The charging IC 2 has a charging function of charging the power supply BAT based on the USB voltage V_{USB} input to the input terminal VBUS. The charging IC 2 acquires a charging current and a charging voltage of the power supply BAT from a terminal or wiring (not illustrated), and executes charging control of the power supply BAT (a power supply control from the charging terminal bat to the power supply BAT) based on the acquired charging current and charging voltage.

The charging IC 2 further has a V_{BAT} power pass function and an OTG function. The V_{BAT} power pass function is a function of outputting, from an output terminal SYS, a system power supply voltage Vcc0 that substantially coincides with the power supply voltage V_{BAT} input to the charging terminal bat. The OTG function is a function of outputting, from the input terminal VBUS, a system power supply voltage Vcc4 obtained by stepping up the power supply voltage V_{BAT} input to the charging terminal bat. The on/off of the OTG function of the charging IC 2 is controlled by the MCU 1 through the serial communication using the communication line LN. In the OTG function, the power supply voltage V_{BAT} input to the charging terminal bat may be directly output from the input terminal VBUS. In this case, the power supply voltage V_{BAT} and the system power supply voltage Vcc4 substantially coincide with each other. A plurality of signal lines such as a data line for data transmission and a clock line for synchronization are required to perform serial communication, but only one signal line is illustrated in FIGS. 10 to 16 for simplification.

The output terminal SYS of the charging IC 2 is connected to the power supply terminal VDD of the MCU 1, the power supply terminal VDD of the Hall IC 13, the power supply terminal VCC of the communication IC 15, the power supply terminal VDD of the Hall IC 14, and a series circuit (a series circuit of a resistor and a capacitor) connected to the operation switch OPS. A charge enable terminal CE (⁻) of the charging IC 2 is connected to a terminal P22 of the MCU 1 via a resistor. In order to stabilize the voltage supplied to these power supply terminals, a voltage regulator may be connected to the output terminal SYS of the charging IC 2.

An output terminal OUT of the Hall IC 13 is connected to a terminal P3 of the MCU 1. When the outer panel 115 is detached, a low-level signal is output from the output terminal OUT of the Hall IC 13. The MCU 1 determines whether the outer panel 115 is attached based on a signal input to the terminal P3.

The LED mounting board 163 is provided with a series circuit (a series circuit of a resistor and a capacitor) connected to the operation switch OPS. The series circuit is connected to a power supply line that connects the output terminal SYS of the charging IC 2, the power supply terminal VDD of the MCU 1, the power supply terminal VDD of the Hall IC 13, the power supply terminal VDD of the Hall IC 14, and the power supply terminal VCC of the communication IC 15. A connection point between the resistor and the capacitor of the series circuit is connected to the terminal P4 of the MCU 1 and the operation switch OPS. In a state where the operation switch OPS is not pressed, the operation switch OPS is not conductive and the signal input to the terminal P4 of the MCU 1 is at a high level due to the voltage output from the output terminal SYS of the charging IC 2. When the operation switch OPS is pressed and the operation switch OPS is in a conductive state, the signal input to the terminal P4 of the MCU 1 is connected to the ground line, and thus the signal is at a low level. The MCU 1 detects the operation of the operation switch OPS based on the signal input to the terminal P4.

### <Operation in Each Operation Mode of Inhaler>

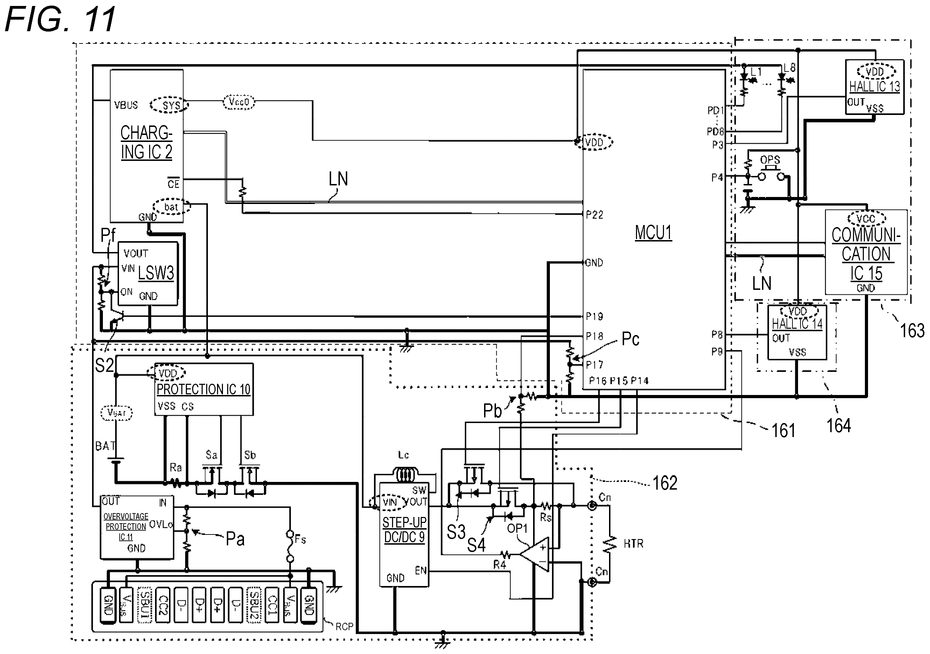

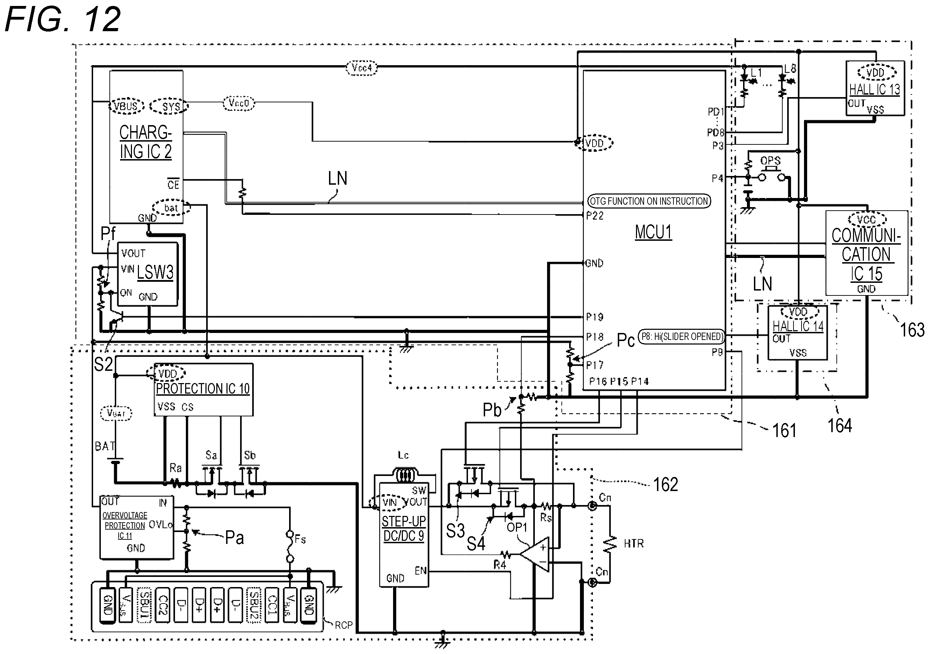

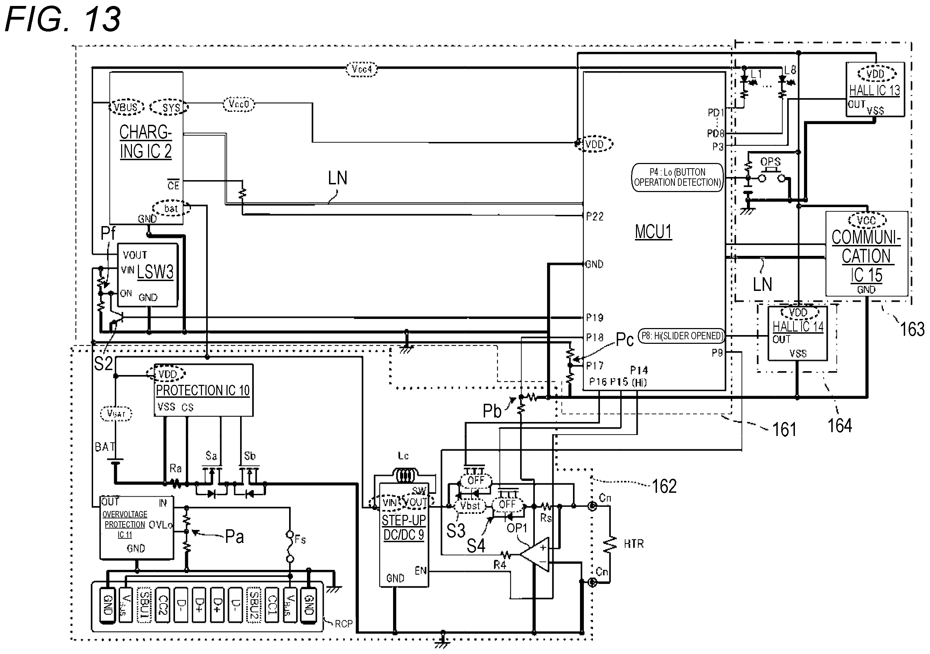

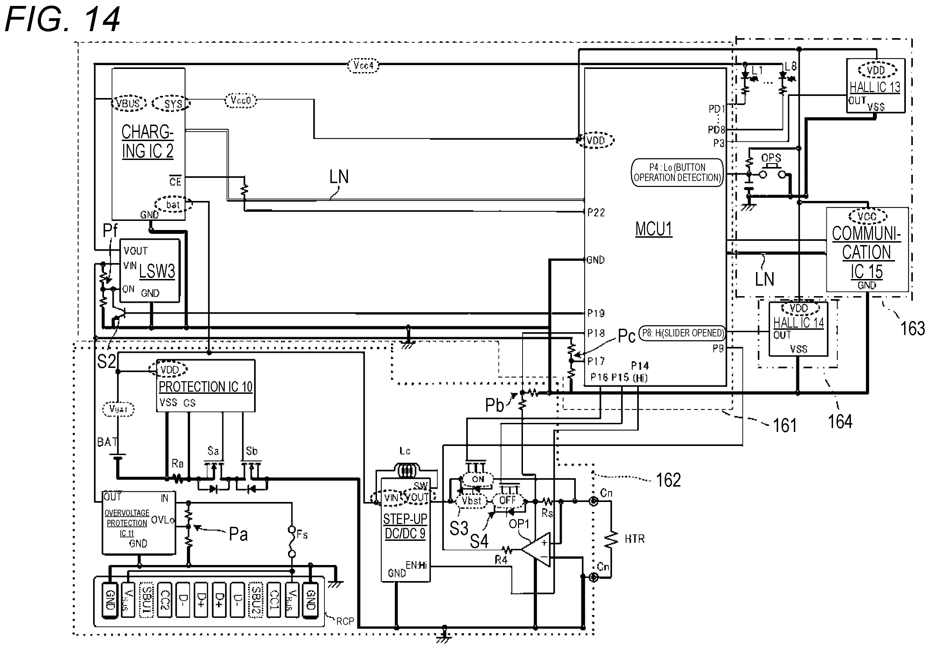

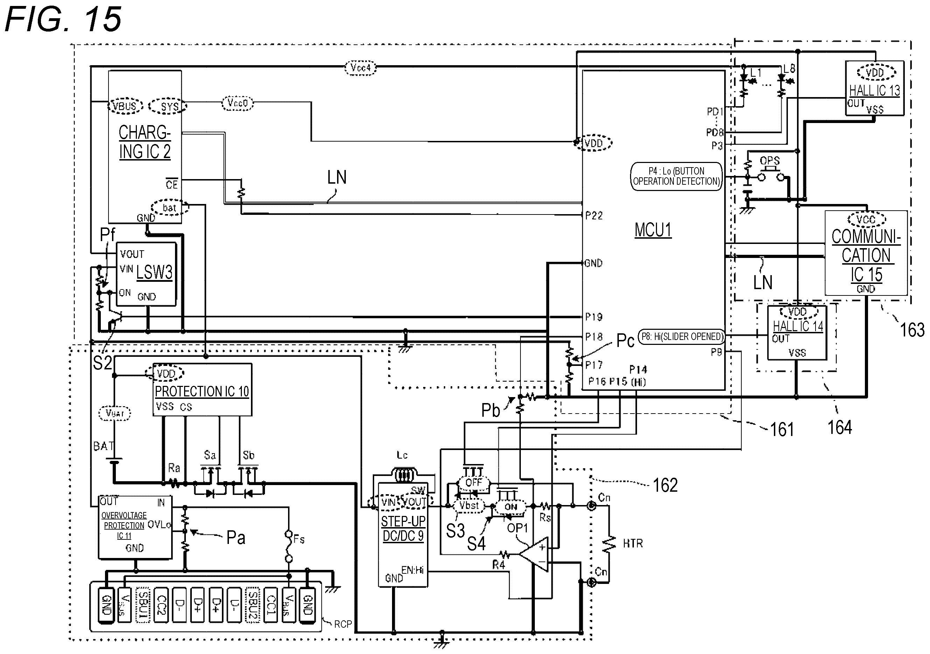

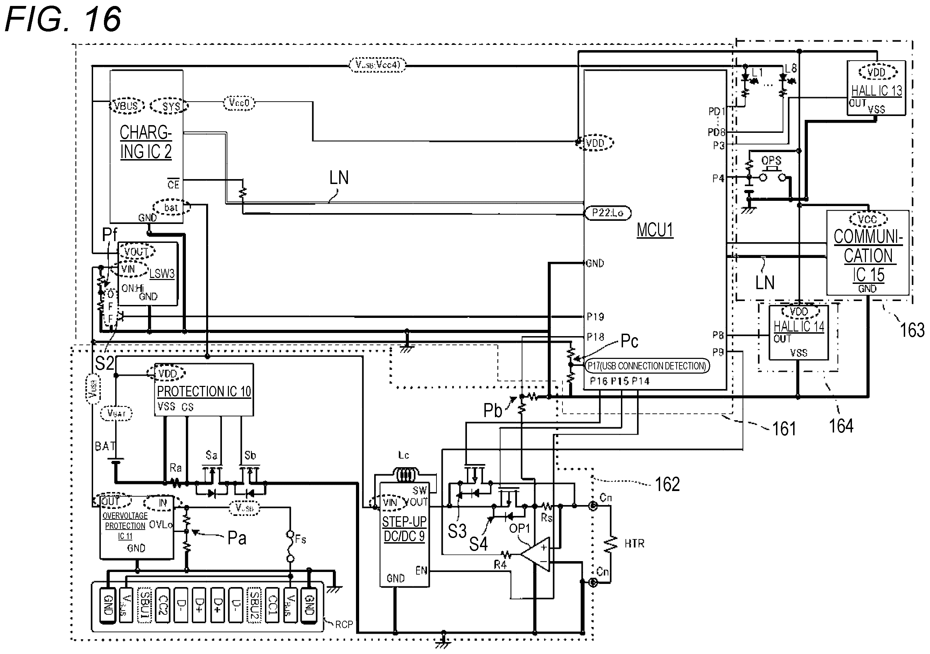

An operation of the electric circuit illustrated in FIG. 10 will be described below with reference to FIGS. 11 to 16. FIG. 11 is a diagram illustrating an operation of the electric circuit in the sleep mode. FIG. 12 is a diagram illustrating an operation of the electric circuit in the active mode. FIG. 13 is a diagram illustrating an operation of the electric circuit in the heating initial setting mode. FIG. 14 is a diagram illustrating an operation of the electric circuit during heating by the heater HTR in the heating mode. FIG. 15 is a diagram illustrating an operation of the electric circuit when a temperature of the heater HTR is detected in the heating mode. FIG. 16 is a diagram illustrating an operation of the electric circuit in the charging mode. In FIGS. 11 to 16, among terminals of the chipped electronic components, terminals surrounded by broken ellipses indicate terminals to which the power supply voltage V_{BAT}, the USB voltage V_{USB}, the system power supply voltages, and the like are input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: FIG. 11>

The MCU 1 enables the V_{BAT} power pass function of the charging IC 2 and disables the OTG function and the charging function. Since the USB voltage V_{USB} is not input to the input terminal VBUS of the charging IC 2, the V_{BAT} power pass function of the charging IC 2 is enabled. Since a signal for enabling the OTG function from the communication line LN is not output from the MCU 1 to the charging IC 2, the OTG function is disabled. Therefore, the charging IC 2 generates the system power supply voltage Vcc0 from the power supply voltage V_{BAT} input to the charging terminal bat, and outputs the system power supply voltage Vcc0 from the output terminal SYS. The system power supply voltage Vcc0 output from the output terminal SYS is input to the power supply terminal VDD of the MCU 1, the power supply terminal VDD of the Hall IC 13, the power supply terminal VCC of the communication IC 15, and the power supply terminal VDD of the Hall IC 14. The system power supply voltage Vcc0 is set to be lower than the USB voltage V_{USB} input from the external power supply to the power supply input terminal V_{BUS} at the time of charging.

As described above, since the OTG function of the charging IC 2 is stopped in the sleep mode, the supply of power to the LEDs L1 to L8 is stopped.

### <Active Mode: FIG. 12>

Upon detecting that the signal input to the terminal P8 is at a high level and the slider 119 is opened from a state of the sleep mode in FIG. 11, the MCU 1 activates the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: FIG. 13>

When a signal input to the terminal P4 is at a low level (the operation switch OPS is pressed) from the state of FIG. 12, the MCU 1 performs various settings necessary for heating, and then inputs a high-level enable signal from the terminal P14 to the enable terminal EN of the step-up DC/DC converter 9. Accordingly, the step-up DC/DC converter 9 outputs, from the output terminal VOUT, a drive voltage V_{bst} obtained by stepping up the power supply voltage V_{BAT}. The drive voltage V_{bst} is supplied to the switch S3 and the switch S4. In this state, the switches S3 and S4 are turned off. Thereafter, the process proceeds to the heating mode.

### <Heater Heating in Heating Mode: FIG. 14>

In the state in FIG. 13, the MCU 1 starts switching control of the switch S3 connected to the terminal P16 and switching control of the switch S4 connected to the terminal P15. These switching control may be started automatically when the above-described heating initial setting mode is completed, or may be started by further pressing the operation switch OPS. Specifically, as illustrated in FIG. 14, the MCU 1 turns on the switch S3, turns off the switch S4, supplies the drive voltage V_{bst} to the heater HTR, and executes heating control for heating the heater HTR for aerosol generation. As illustrated in FIG. 15, the MCU 1 turns off the switch S3, turns on the switch S4, and executes temperature detection control for detecting the temperature of the heater HTR.

### <Heater Temperature Detection in Heating Mode: FIG. 15>

As illustrated in FIG. 15, during the temperature detection control, the drive voltage V_{bst} is input to the positive power supply terminal of the operational amplifier OP1 and also to the voltage dividing circuit Pb. A voltage divided by the voltage dividing circuit Pb is input to the terminal P 18 of the MCU 1. The MCU 1 acquires a voltage of the positive power supply terminal of the operational amplifier OP1 during the temperature detection control based on the voltage input to the terminal P18.

During the temperature detection control, the drive voltage V_{bst} is supplied to the series circuit of the resistor Rs and the heater HTR. A voltage Vₕₑₐₜ obtained by dividing the drive voltage V_{bst} by the resistor Rs and the heater HTR is input to the non-inverting input terminal of the operational amplifier OP 1. The operational amplifier OP1 amplifies and outputs a difference between a voltage input to the inverting input terminal and the voltage Vₕₑₐₜ input to the non-inverting input terminal.

An output signal of the operational amplifier OP 1 is input to the terminal P9 of the MCU 1. The MCU 1 acquires the temperature of the heater HTR based on the signal input to the terminal P9, the voltage of the positive power supply terminal of the operational amplifier OP1 acquired based on the input voltage of the terminal P18, and an electric resistance value of the known resistor Rs.

### <Charging Mode: FIG. 16>

FIG. 16 illustrates a case where the USB connection is established in a state of the sleep mode. When the USB connection is established, the USB voltage V_{USB} is input to the input terminal VIN of the LSW3 via the overvoltage protection IC 11. The USB voltage V_{USB} is also supplied to the voltage dividing circuit Pf connected to the input terminal VIN of the LSW3. Since the bipolar transistor S2 is turned on immediately after the USB connection is established, a signal input to the control terminal ON of the LSW3 remains at a low level. The USB voltage V_{USB} is also supplied to the voltage dividing circuit Pc connected to the terminal P17 of the MCU 1, and a voltage divided by the voltage dividing circuit Pc is input to the terminal P17. The MCU 1 detects that the USB connection is established based on the voltage input to the terminal P 17. The voltage dividing circuit Pc is configured to set the voltage input to the terminal P17 to be equal to or lower than the system power supply voltage Vcc0 input to the power supply terminal VDD of the MCU 1.

In response to detecting that the USB connection is established, the MCU 1 turns off the bipolar transistor S2 connected to the terminal P19. When a low-level signal is input to a gate terminal of the bipolar transistor S2, the USB voltage V_{USB} divided by the voltage dividing circuit Pf is input to the control terminal ON of the LSW3. Accordingly, a high-level signal is input to the control terminal ON of the LSW3, and the LSW3 outputs the USB voltage V_{USB} from the output terminal VOUT. The USB voltage V_{USB} output from the LSW3 is input to the input terminal VBUS of the charging IC 2. The USB voltage V_{USB} output from the LSW3 is directly supplied to the LEDs L1 to L8 as the system power supply voltage Vcc4.

In response to detecting that the USB connection is established, the MCU 1 further outputs a low-level enable signal from the terminal P22 to the charge enable terminal CE (⁻) of the charging IC 2. Accordingly, the charging IC 2 enables a charging function of the power supply BAT and starts charging the power supply BAT with the USB voltage V_{USB} input to the input terminal VBUS. At this time, the MCU 1 does not perform the heating of the heater HTR for aerosol generation while keeping the switches S3 and S4 off. In other words, when the MCU 1 detects that the USB connection is established based on the voltage input to the terminal P17, the MCU 1 prohibits supply of power from the power supply BAT to the heater connector Cn. As a result, power consumption from the power supply BAT during charging can be avoided.

### <Receptacle>

As illustrated in FIGS. 10 to 17, the receptacle RCP includes a plurality of pins (terminals) electrically connected to the pins of the inserted plug. Specifically, the receptacle RCP includes a pair of GND pins ("GND" in the drawings, hereinafter, also referred to as a GND pin pair), a pair of V_{BUS} pins ( "V_{BUS} " in the drawings, hereinafter, also referred to as a V_{BUS} pin pair), a CC1 pin ("CC1" in the drawings), a CC2 pin ( "CC2" in the drawings), a pair of D- pins ("D-" in the drawings, hereinafter, also referred to as a D- pin pair), a pair of D+ pins ( "D+" in the drawings, hereinafter, also referred to as a "D+ pin pair"), a SBU1 pin ("SBU1" in the drawings), and a SBU2 pin ("SBU2" in the drawings). In the present embodiment, only main pins among the pins included in the receptacle RCP are illustrated. Roles of these pins will be described later.

### <Protective Component for Receptacle>

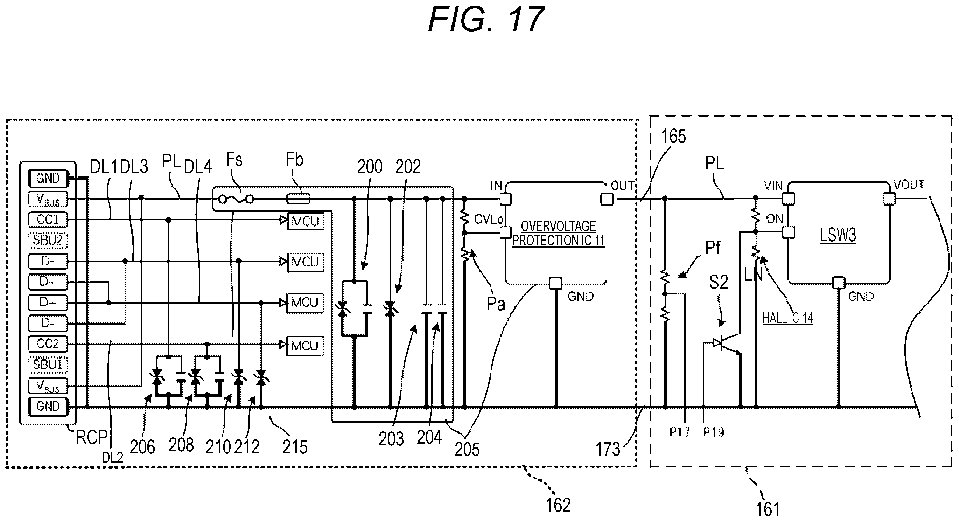

FIG. 17 is a diagram illustrating a power supply line PL extending from the receptacle RCP and protective components for data lines DL1 to DL4 and the receptacle RCP. The protective component is a concept including a protective element (an element component) and a protection IC (an integrated circuit).

The GND pin pair of the receptacle RCP is ground by the ground line. The V_{BUS} pin pair of the receptacle RCP receives an input of power to the inhaler 100 from a plug of the external power supply inserted into the receptacle RCP. For example, when the plug is inserted into the receptacle RCP, predetermined USB bus power is supplied from the inserted plug to the inhaler 100 via the V_{BUS} pin pair. Power according to USB power delivery (USB PD) may be supplied, to the inhaler 100, from the plug of the external power supply inserted into the receptacle RCP. Since a voltage applied between the V_{BUS} pin pair of the receptacle RCP and the GND pin pair of the receptacle RCP is used for charging of the power supply BAT or an operation of the inhaler 100, the V_{BUS} pin pair of the receptacle RCP functions as a power supply terminal. Therefore, a line connected to the V_{BUS} pin pair of the receptacle RCP is referred to as the power supply line PL.

The V_{BUS} pin pair is connected to an IN pin of the overvoltage protection IC 11 via the power supply line PL. The power supply line PL is further connected to a VIN pin of the LSW3 from an OUT pin of the overvoltage protection IC 11 via the flexible interconnect board 165. A plurality of protective components are provided on the power supply line PL between the V_{BUS} pin pair and the overvoltage protection IC 11. Specifically, on the power supply line PL, the fuse Fs and a ferrite bead Fb are disposed between the V_{BUS} pin pair and the overvoltage protection IC 11 in this order from a side of the V_{BUS} pin pair. Furthermore, the power supply line PL is connected to the ground line via an EMI (Electro Magnetic Interference) removing filter 200, an ESD (Electro Static Discharge) suppressor 202, and capacitors 203 and 204 on a side of the overvoltage protection IC 11 with respect to the ferrite bead Fb. The EMI removing filter 200 is mainly used to eliminate (remove) electromagnetic interference. The ESD suppressor 202 is mainly used to eliminate (remove) electrostatic discharge and surge. Hereinafter, the overvoltage protection IC 11, the fuse Fs, the ferrite bead Fb, the EMI removing filter 200, the ESD suppressor 202, and the capacitors 203 and 204 provided in the power supply line PL may be referred to as power supply line protective components 205.

The fuse Fs is a non-ground element that blocks a circuit when a large current equal to or greater than a rated current flows through the power supply line PL. The non-ground element is an element in which both ends of the element are not directly connected to the ground line. The fuse Fs may be a power fuse that detects a large current equal to or higher than a rated current from power, or may be a temperature fuse that detects a large current equal to or higher than a rated current from a temperature. The ferrite bead Fb is a type of inductor and is a non-ground element that converts noise into heat in a predetermined band. A winding-type inductor may be used instead of the ferrite bead Fb.

The ESD suppressor 202 is an element having two terminals (electrodes) and having a property that a resistance value rapidly decreases when a high voltage is applied between the terminals. The ESD suppressor 202 is a ground element having one end connected to the power supply line PL and the other end connected to the ground line. The ground element is an element having one end directly connected to the ground line. Accordingly, for example, when static electricity is generated in the V_{BUS} pin pair by rubbing the plug in a case where the plug is inserted into the receptacle RCP, the static electricity can be released to the ground line via the ESD suppressor 202 to protect the overvoltage protection IC 11.

The capacitors CD1 and CD2 smooth ripple components (pulsation components) included in the input voltage by utilizing charging operations and discharging operations of the capacitors to stabilize the output voltage. The capacitors CD1 and CD2 are ground elements each having one end connected to the power supply line PL and the other end connected to the ground line. Accordingly, when noise or surge occurs in the V_{BUS} pin pair, the capacitors CD1 and CD2 can protect the overvoltage protection IC 11 from the noise or surge.

The EMI removing filter 200 is a ground element in which one end of a parallel circuit in which an ESD suppressor and the capacitors are connected in parallel is connected to the power supply line PL and the other end is connected to the ground line. Accordingly, for example, when noise that may cause an electromagnetic failure in the V_{BUS} pin pair is generated by rubbing the plug in the case where the plug is inserted into the receptacle RCP, the noise can be released to the ground line via the EMI removing filter or can be held in the capacitors to protect the overvoltage protection IC 11.

The power supply line protective components 205 are disposed only on the receptacle mounting board 162 on which the receptacle RCP is disposed out of the MCU mounting board 161 on which the MCU 1 and the charging IC 2 are disposed and the receptacle mounting board 162. Accordingly, the noise or surge is sufficiently removed from the power supplied from the external power supply by the power supply line protective components 205 before reaching the MCU mounting board 161, so that the MCU mounting board 161 and the MCU 1 and the charging IC 2 that are disposed on the MCU mounting board 161 can be protected. Specific arrangement positions of the power supply line protective components 205 will be described later.

In the present embodiment, the overvoltage protection IC 11, the fuse Fs, the ferrite bead Fb, the EMI removing filter 200, the ESD suppressor 202, and the capacitors 203 and 204 are exemplified as the power supply line protective components 205, but the type and number of the power supply line protective components can be set freely. The power supply line protective components 205 preferably include both a ground element that is an element connected to the ground line and a non-ground element that is not connected to the ground line. By disposing both a ground terminal and a non-ground terminal on the power supply line PL through which a large current flows, carefully protection can be achieved.

Arrangement orders of the power supply line protective components can be set freely. As in the present embodiment, the VBUS pin pair, the non-ground element (the fuse Fs and the ferrite bead Fb), the ground elements (the EMI removing filter 200, the ESD suppressor 202, and the capacitors 203 and 204), and the input terminal VBUS of the charging IC 2 are disposed in this order on the power supply line PL, so that the noise or the like released to the ground to which other electronic components are connected can be reduced by the non-ground element in advance, and the inhaler 100 operates stably.

Although one of the power supply line protective components 205 may be disposed on the MCU mounting board 161, the number of power supply line protective components 205 disposed on the receptacle mounting board 162 is preferably larger than the number of power supply line protective components 205 disposed on the MCU mounting board 161. Accordingly, the MCU mounting board 161 and the charging IC 2 disposed on the MCU mounting board 161 can be protected.

The CC1 pin and the CC2 pin of the receptacle RCP are configuration channel pins, and are pins used to detect a vertical orientation of the plug inserted into the receptacle RCP. That is, the CC1 pin and CC2 pin have a property as a data terminal.

The D- pin pair and the D+ pin pair of the receptacle RCP are pins for transferring data to the external power supply via the plug of the external power supply inserted into the receptacle RCP. That is, the D- pin and the D+ pin have a property as a data terminal.

The CC1 pin, the CC2 pin, the D- pin pair, and the D+ pin pair of the receptacle RCP are connected to the MCU 1 via the data lines DL1 to DL4, respectively. Protective components are provided in the data lines DL1 to DL4. The protective components preferably include only one of the non-ground elements and the ground elements, and more preferably include only the ground elements. By reducing the number of protective elements on the data lines DL1 to DL4 through which a small current flows, the operation of the inhaler 100 can be stabilized while preventing an increase in cost and size of the inhaler 100. In particular, since the data lines DL1 to DL4 are provided with ground elements for releasing noise or the like to the ground, protection can be effectively achieved with a small number of protective elements.

Specifically, in the present embodiment, one end of an EMI removing filter 206 is connected to the data line DL1 of the CC1 pin, one end of an EMI removing filter 208 is connected to the data line DL2 of the CC2 pin, one end of an ESD suppressor 210 is connected to the data line DL3 of the D- pin pair, one end of an ESD suppressor 212 is connected to the data line DL4 of the D+ pin pair, and the other ends of the EMI removing filters 206 and 208 and the ESD suppressor 210, 212 are connected to the ground line. Accordingly, for example, when static electricity or noise is generated in these pins by rubbing the plug in a case where the plug is inserted into the receptacle RCP, the static electricity or noise can be released to the ground line via the EMI removing filters 206 and 208 or the ESD suppressors 210 and 212. Accordingly, the MCU 1 can be protected or an erroneous operation of the MCU 1 can be prevented. Hereinafter, the EMI removing filters 206 and 208 and the ESD suppressors 210 and 212 that are provided on the data lines DL1 to L4 may be referred to as data line protective components 215.

The data line protective components 215 are disposed only on the receptacle mounting board 162 out of the MCU mounting board 161 and the receptacle mounting board 162. Accordingly, the noise is sufficiently removed from the power supplied from the external power supply by the data line protective components 215 before reaching the MCU mounting board 161, so that the MCU mounting board 161 and the MCU 1 disposed on the MCU mounting board 161 can be protected.

Although one of the data line protective components 215 may be disposed on the MCU mounting board 161, the number of the data line protective components 215 disposed on the receptacle mounting board 162 is preferably larger than the number of the data line protective components 215 disposed on the MCU mounting board 161. Accordingly, the MCU mounting board 161 and the charging IC 2 disposed on the MCU mounting board 161 can be protected.

According to the present embodiment, the power supply line protective components 205 and the data line protective components 215 are disposed only on the receptacle mounting board 162 out of the MCU mounting board 161 and the receptacle mounting board 162. Accordingly, the noise or surge is sufficiently removed from the power supplied from the external power supply by the power supply line protective components 205 and the data line protective components 215 before reaching the MCU mounting board 161, so that the MCU mounting board 161 and the charging IC 2 disposed on the MCU mounting board 161 can be protected.

In the present embodiment, the EMI removing filters 206 and 208 and the ESD suppressors 210 and 212 are exemplified as the data line protective components 215, but the type and number of the data line protective components can be set freely. In order to more appropriately protect the data lines DL1 to L4, electronic components other than the EMI removing filters 206 and 208 and the ESD suppressors 210 and 212 may be used for the data line protective components 215.

The data line protective components 215 may include the same protective element as the power supply line protective components 205. By using a common protective element in the power supply line PL and the data lines DL1 to DL4, procurement cost of the protective element can be reduced, and the cost of the inhaler 100 can be reduced. On the other hand, the data line protective components 215 may not include the same protective element as the power supply line protective components 205. Since the protective elements suitable for the power supply line PL and the data lines DL1 to DL4 can be connected, the operation of the inhaler 100 can be more stabilized.

In the present embodiment, seven components, that is, the overvoltage protection IC 11, the fuse Fs, the ferrite bead Fb, the EMI removing filter 200, the ESD suppressor 202, and the capacitors 203 and 204 are provided as the power supply line protective components 205, and four components, that is, the EMI removing filters 206 and 208 and the ESD suppressors 210 and 212 are provided as the data line protective components 215. As described above, the number and types of the protective components constituting the power supply line protective components 205 and the number and types of the protective components constituting the data line protective components 215 are not limited thereto, but the number of the power supply line protective components 205 is preferably larger than the number of the data line protective components 215. By disposing more protective elements in the line to which a larger current is supplied, the operation of the inhaler 100 can be stabilized while preventing an increase in cost and size of the inhaler 100.

### <Detailed Description of Boards>

Here, an arrangement of the ICs and the elements mounted on the MCU mounting board 161 and the receptacle mounting board 162 will be described.

FIG. 18 is a view illustrating a main surface 162a of the receptacle mounting board 162. On the main surface 162a of the receptacle mounting board 162 extending in the up-down direction, the heater connectors Cn are disposed on an upper side, the receptacle RCP is disposed on a lower end portion, and the reactor Lc of the step-up DC/DC converter 9 is disposed between the heater connectors Cn and the receptacle RCP. Out of the data line protective components 215, the EMI removing filter 208 disposed in the data line DL2 of the CC2 pin, the ESD suppressor 210 disposed in the data line DL3 of the D- pin pair, and the ESD suppressor 212 disposed in the data line DL4 of the D + pin pair are disposed between the receptacle RCP and the reactor Lc and in the vicinity of the receptacle RCP. Since the data line protective components 215 are disposed on the main surface 162a of the receptacle mounting board 162, a board area can be effectively utilized, and an increase in size of the receptacle mounting board 162 can be prevented. Accordingly, the cost and the size of the inhaler 100 may be reduced.

In the vicinity of the receptacle RCP, a battery connector 222 on the positive electrode side (hereinafter, referred to as a positive electrode-side battery connector 222) is disposed on the right side and an opening 176 for fixing the spacer 173 is disposed on the left side to sandwich these data line protective components 215 in the left-right direction. Further, a battery connector 224 on the negative electrode side (hereinafter, referred to as a negative electrode-side battery connector 224) and a power supply temperature detection connector 234 connected to the thermistor T1 constituting the power supply temperature sensor are disposed on a left side of the reactor Lc of the step-up DC/DC converter 9, and the switch S4 for detecting the temperature of the heater HTR is disposed on an opposite side in the left-right direction with respect to the negative electrode side battery connector 224. A positive electrode-side power supply bus bar 236 (see FIGS. 7 and 8) extending from the positive electrode terminal of the power supply BAT is connected to the positive electrode-side battery connector 222, and a negative electrode-side power supply bus bar 238 (see FIGS. 7 and 8) extending from the negative electrode terminal of the power supply BAT is connected to the negative electrode-side battery connector 224.

The opening 176 of the receptacle mounting board 162 for fixing the spacer 173 is provided at a position close to the receptacle RCP disposed on a lower end portion, in other words, closer to a lower end portion side than an upper end portion with respect to a center. Although noise caused by the current may be generated near a path through which the power supplied from the external power supply passes, a board area of the receptacle mounting board 162 can be effectively utilized by providing the spacer 173 near the path, which is not influenced by the noise.

Further, the positive electrode-side battery connector 222 that electrically connects the power supply BAT and the receptacle mounting board 162 is provided at a position close to the receptacle RCP disposed at the lower end portion, in other words, closer to the lower end portion side than the upper end portion with respect to the center. The positive electrode-side battery connector 222, which is a conductor, is not a little influenced by the noise, but a value of a current passing through the battery connector 222 on the positive electrode side is large, and thus an influence of the noise is small. Therefore, the board area of the receptacle RCP can be effectively utilized by providing the positive electrode-side battery connector 222 near the path. These measures may prevent an increase in size of the receptacle mounting board 162, so that the cost and size of the inhaler 100 may be reduced.

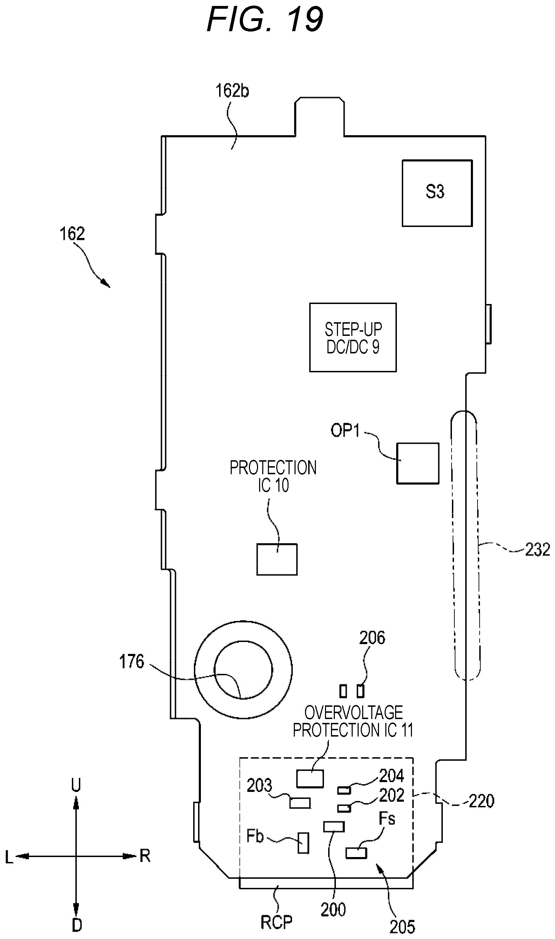

FIG. 19 is a view illustrating the secondary surface 162b of the receptacle mounting board 162. The power supply line protective components 205 are disposed below the opening 176 on the secondary surface 162b of the receptacle mounting board 162. Specifically, the overvoltage protection IC 11, the fuse Fs, the ferrite bead Fb, the EMI removing filter 200, the ESD suppressor 202, and the capacitors 203 and 204 that constitute the power supply line protective components 205 are disposed at the lower end portion of the secondary surface 162b of the receptacle mounting board 162. As described above, by disposing the power supply line protective components 205 on the secondary surface 162b opposite to the main surface 162a on which the receptacle RCP is disposed, the board area can be effectively utilized as compared with a case where the receptacle RCP and the power supply line protective component 205 are disposed on the same surface, and an increase in size of the receptacle mounting board 162 can be prevented. Accordingly, the cost and the size of the inhaler 100 may be reduced.

The overvoltage protection IC 11, the fuse Fs, the ferrite bead Fb, the EMI removing filter 200, the ESD suppressor 202, and the capacitors 203 and 204 are disposed in a position overlapping the receptacle RCP when viewed from a direction (the front-rear direction) orthogonal to an element disposition surface of the receptacle mounting board 162, that is, in a receptacle projection region 220 which is a portion where the receptacle RCP is projected in the front-rear direction. Therefore, a distance between the V_{BUS} pin pair of the receptacle RCP and the power supply line protective component 205 can be shortened to a maximum, and an influence of the power before being protected by the power supply line protective component 205 on other electronic components disposed on the receptacle mounting board 162 can be reduced. Accordingly, the durability of the inhaler 100 may be improved, and an operation of the inhaler 100 may be stabilized. It is not necessary to dispose all of the power supply line protective components 205 in the receptacle projection region 220, and at least one or more of the power supply line protective components 205 may be disposed in the receptacle projection region 220.

Further, on a right side of the opening 176, the EMI removing filter 206 constituting the data line protective components 215 is disposed, and on an upper side thereof, the protection IC 10, the operational amplifier OP1, the step-up DC/DC converter 9, and the switch S3 for aerosol generation are disposed.

As described above, the data line protective components 215 (the EMI removing filter 208, the ESD suppressor 210, and the ESD suppressor 212) excluding the EMI removing filter 206 are disposed on the main surface 162a of the receptacle mounting board 162. While the power supply line protective components 205 are disposed on the secondary surface 162b of the receptacle mounting board 162, the board area can be effectively utilized by disposing many data line protective components 215 on the main surface 162a and changing a mounting surface. Accordingly, the size of the receptacle mounting board 162 can be prevented from increasing, and the cost and size of the inhaler 100 can be reduced. All the data line protective components 215 including the EMI removing filter 206 may be collectively disposed on the main surface 162a of the receptacle mounting board 162.

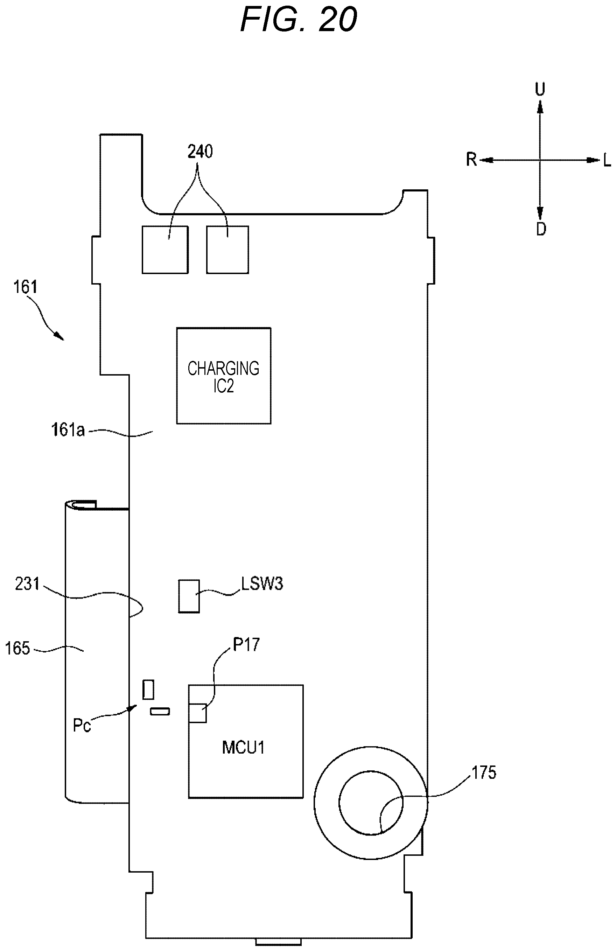

FIG. 20 is a view illustrating the main surface 161a of the MCU mounting board 161. The charging IC 2 is disposed on an upper side of the main surface 161a of the MCU mounting board 161 extending in the up-down direction, the MCU 1 is disposed on a lower side of the main surface 161a, and the LSW3 is disposed between the charging IC 2 and the MCU 1. A heater temperature detection connector 240 to which the thermistor T3 constituting the heater temperature sensor is connected via a conductive wire is disposed on a further upper side of the charging IC 2. The opening 175 for fixing the spacer 173 is disposed diagonally lower left of the MCU 1. The voltage dividing circuit Pc, which is a series circuit of two resistors, is disposed between the MCU 1 and a right edge portion of the MCU mounting board 161 on the main surface 161a of the MCU mounting board 161.

The MCU 1 and the charging IC 2 are separated from the receptacle RCP by disposing the MCU 1 and the charging IC 2 on the MCU mounting board 161 with respect to the receptacle mounting board 162 on which the receptacle RCP is disposed, and thus the MCU 1 and the charging IC 2 are less likely to be influenced by static electricity or the like that may enter from the receptacle RCP. Accordingly, the operation of the inhaler 100 can be more stabilized.

The LSW 3 capable of opening and closing the power supply line PL and provided between the power supply line protective component 205 and the input terminal VBUS of the charging IC 2 is disposed on the MCU mounting board 161. Therefore, the power supplied from the external power supply from which noise or the like is removed by the power supply line protective components 205 is prevented from being further supplied to the charging IC 2 by the LSW3. Accordingly, an inrush current or a short-circuit current is prevented from being input to the charging IC 2, so that the charging IC 2 can be further protected.

As described above, when the signal input to the control terminal ON via the bipolar transistor S2 connected to the terminal P19 of the MCU 1 is at a high level, the LSW 3 supplies the power to the charging IC 2. In other words, the LSW 3 is not automatically turned on, but is turned on only after receiving a command from the MCU 1. By interposing the control of the MCU 1 in the LSW 3, an erroneous operation of the LSW 3 can be prevented, and thus the charging IC 2 can be further protected.

On the other hand, the MCU 1 controls the supply of power from the power supply BAT to the heater connector Cn based on an input of a voltage supplied from the power supply input terminal V_{BUS} of the receptacle RCP to the terminal P17. Specifically, when the voltage supplied from the power supply input terminal V_{BUS} is input to the terminal P17, the MCU 1 prohibits the supply of the power from the power supply BAT to the heater connector Cn. Therefore, the MCU 1 protected from the power supplied from the external power supply can execute control based on the detection of the external power supply. Accordingly, the charging control can be executed more reliably, and the performance of the inhaler 100 is improved. Power consumption from the power supply BAT during charging can be avoided.

The power supplied from the external power supply from which noise or the like is removed by the power supply line protective components 205 is input to the voltage dividing circuit Pc. Accordingly, the voltage dividing circuit Pc is less likely to be damaged and the control by the MCU 1 can be executed more reliably, the performance of the inhaler 100 is improved. The voltage dividing circuit Pc prevents a voltage higher than the system power supply voltage Vcc0 from being input to the MCU 1, and the inhaler 100 operates stably.

Two resistors of the voltage dividing circuit Pc are disposed between the MCU 1 and a right edge portion, which is an edge of the MCU mounting board 161 closest to the MCU 1. Specifically, the two resistors of the voltage dividing circuit Pc are disposed between the right edge portion of the MCU mounting board 161 and the terminal P17 of the MCU 1. Both of the two resistors of the voltage dividing circuit Pc need not necessarily be disposed between the MCU 1 and the right edge portion, which is the edge of the MCU mounting board 161, and at least one of the two resistors may be disposed. Accordingly, at least a part of the voltage dividing circuit Pc serves as a barrier against noise entering from the right edge portion of the MCU mounting board 161, and thus the MCU 1 is hardly damaged or erroneously operated, and the inhaler 100 operates stably.

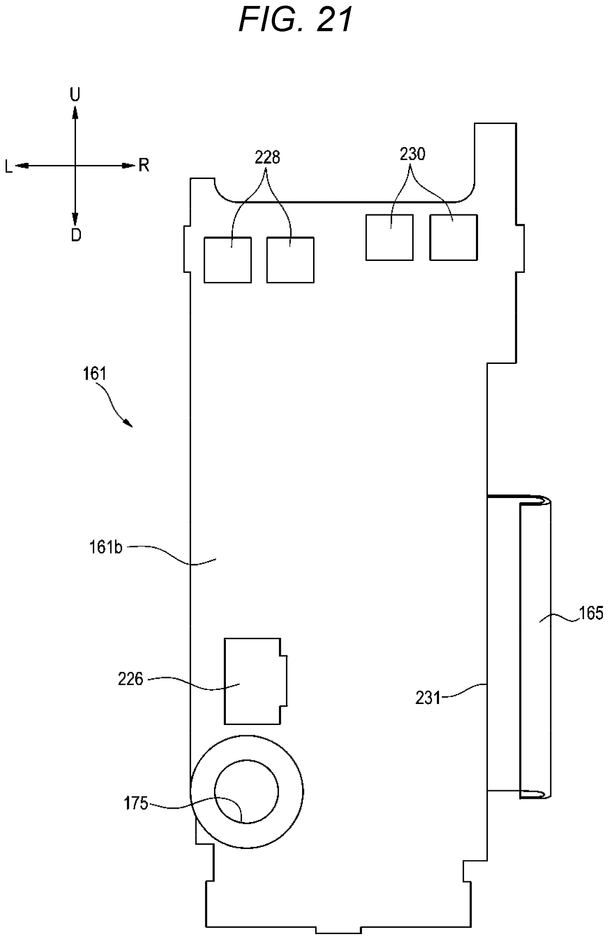

FIG. 21 is a view illustrating the secondary surface 161b of the MCU mounting board 161. On the secondary surface 161b of the MCU mounting board 161, a motor connector 226 to which the vibration motor M is connected via a conductive wire is disposed on an upper side of the opening 175, and a case temperature detection connector 228 to which the thermistor T4 constituting the case temperature sensor is connected via a conductive wire and an intake detection connector 230 to which the thermistor T2 constituting the intake sensor is connected via a conductive wire are disposed on a further upper side.

The flexible interconnect board 165 electrically connecting the MCU mounting board 161 and the receptacle mounting board 162 connects FPC connection portions 231 and 232 of the MCU mounting board 161 and the receptacle mounting board 162. The FPC connection portions 231 and 232 are located on right end portions of the MCU mounting board 161 and the receptacle mounting board 162, and at positions extending from a substantially central portion in the up-down direction to the vicinity of the openings 175 and 176, respectively.

As illustrated in FIG. 20, in the MCU mounting board 161, the LSW3 is disposed closer to the FPC connection portion 231 than the charging IC 2. That is, the LSW 3 is provided close to a position where the power supplied from the external power supply is input to the MCU mounting board 161. Accordingly, an influence of the noise generated when the inrush current, the short-circuit current, or the like is reduced by the LSW3 on other elements or ICs disposed on the MCU mounting board 161 can be reduced, and thus the MCU mounting board 161 can be further protected. The LSW3 is preferably disposed closer to the FPC connection portion 231 than any IC disposed on the MCU mounting board 161.

As illustrated in FIG. 18, the FPC connection portion 232 of the receptacle mounting board 162 is provided at a position close to the receptacle RCP disposed on the lower end portion, in other words, closer to the lower end portion side than the upper end portion with respect to the center. Accordingly, the power supplied from the external power supply does not pass through the entire receptacle mounting board 162, and the influence of the noise generated by the electric current on other elements or ICs disposed on the receptacle mounting board 162 can be reduced.

Although various embodiments have been described above with reference to the drawings, it is needless to say that the invention is not limited thereto. It is apparent to those skilled in the art that various modifications or corrections can be conceived within the scope described in the claims, and it is understood that the modifications or corrections naturally fall within the technical scope of the invention. In addition, respective constituent elements in the above embodiment may be optionally combined without departing from the gist of the invention.

In the present description, at least the following matters are described. In parentheses, corresponding constituent components and the like in the above-mentioned embodiment are indicated, but the invention is not limited thereto.
(1) A power supply unit of an aerosol generation device (an non-combustion inhaler 100), the power supply unit including:
   a power supply (a power supply BAT);
   a heater connector (a heater connector Cn) to which a heater (a heater HTR) configured to heat an aerosol source by consuming power supplied from the power supply is connected;
   a controller (an MCU 1) configured to control supply of the power from the power supply to the heater connector;
   a charging IC (a charging IC 2) including an input terminal (an input terminal VBUS) and a charging terminal (a charging terminal bat) connected to the power supply and configured to convert power input to the input terminal and output the power from the charging terminal;
   a receptacle (a receptacle RCP) including a power supply terminal (a power supply input terminal V_{BUS}) and a data terminal (a CC1 pin, a CC2 pin, a D- pin, and a D+ pin) and electrically connected to an external power supply;
   a power supply line (a power supply line PL) connecting the power supply terminal and the input terminal;
   a data line (data lines DL1 to DL4) connecting the data terminal and the controller;
   first protective components (power supply line protective components 205) provided on the power supply line; and
   a second protective component (data line protective components 215) provided on the data line, in which
   the number of the first protective components is larger than the number of the second protective component.

According to (1), by disposing more protective elements in the line to which a larger current is supplied, an operation of the power supply unit of an aerosol generation device can be stabilized while preventing an increase in cost and size of the power supply unit.

(2) The power supply unit of an aerosol generation device according to (1), further including:
a ground, in which
the first protective components include a ground element (an EMI removing filter 200, an ESD suppressor 202, capacitors 203 and 204) that is an element connected to the ground, and a non-ground element (a fuse Fs and a ferrite bead Fb) that is not connected to the ground, and
the second protective component includes only one of the ground element and the non-ground element.

According to (2), a power supply line through which a large current flows is carefully protected by the ground terminal and the non-ground terminal, and by reducing the number of protective elements in a data line through which a small current flows, an operation of the power supply unit of an aerosol generation device can be stabilized while preventing an increase in cost and size of the power supply unit.

(3) The power supply unit of an aerosol generation device according to (2), in which
the second protective component includes only the ground element out of the ground element and the non-ground element.

According to (3), since the data line is provided with the ground element for releasing noise or the like to the ground, protection can be effectively achieved with a small number of protective elements. Accordingly, the operation of the power supply unit of an aerosol generation device can be stabilized while preventing an increase in cost and size of the power supply unit.

(4) The power supply unit of the aerosol generation device according to (2) or (3), in which
the power supply terminal, the non-ground element, the ground element, and the input terminal are connected in this order on the power supply line.

According to (4), since noise or the like released to the ground to which other electronic components are connected can be reduced by the non-ground element in advance, the power supply unit of the aerosol generation device operates stably.

(5) The power supply unit of an aerosol generation device according to any one of (1) to (4), in which
the first protective components and the second protective component include the same element.

According to (5), by using a common protective element in the power supply line and the data line, procurement cost of the protective element can be reduced. Accordingly, the cost and size of the power supply unit of an aerosol generation device can be reduced.

(6) The power supply unit of an aerosol generation device according to any one of (1) to (4), in which
the first protective components and the second protective component do not include the same element.

According to (6), since the protective elements suitable for the power supply line and the data line can be connected, the operation of the aerosol generation device can be more stabilized.

(7) The power supply unit of an aerosol generation device according to any one of (1) to (6), further including:
a first board (a MCU mounting board 161); and
a second board (a receptacle mounting board 162) separate from the first board, in which the controller and the charging IC are disposed on the first board, and
the receptacle is disposed on the second board.

According to (7), since the controller and the charging IC are separated from the receptacle, the controller and the charging IC are less likely to be influenced by static electricity or the like that may enter from the receptacle. Accordingly, the operation of the power supply unit of an aerosol generation device can be more stabilized.

(8) The power supply unit of an aerosol generation device according to (7), in which
the first protective components and the second protective component are disposed only on the second board out of the first board and the second board.

According to (8), since the noise is sufficiently removed from the power supplied from the external power supply by the first protective components and the second protective component before reaching the first board on which the controller and the charging IC are disposed, the operation of the power supply unit of the aerosol generation device can be more stabilized.

(9) The power supply unit of an aerosol generation device according to (7) or (8), in which
the second board has a main surface (a main surface 162a) and a secondary surface (a secondary surface 162b) that is a back surface of the main surface,
the receptacle is disposed on the main surface, and
the first protective components are disposed on the secondary surface.

According to (9), since the board area can be effectively utilized as compared with a case where the receptacle and the first protective components are disposed on the same surface, an increase in size of the second board can be prevented. Accordingly, the cost and size of the power supply unit of an aerosol generation device can be reduced.

(10) The power supply unit of an aerosol generation device according to (9), in which
at least one or more of the first protective components are disposed in a region (a receptacle projection region 220) obtained by projecting the receptacle from a direction orthogonal to the second board.

According to (10), a distance between the power supply terminal of the receptacle and the first protective components can be shortened to a maximum, and an influence of the power before being protected by the first protective components on other electronic components disposed on the second board can be reduced. Accordingly, the durability of the power supply unit of an aerosol generation device can be improved, and the operation of the power supply unit can be stabilized.

(11) The power supply unit of an aerosol generation device according to (9) or (10), in which
the second protective component is disposed on the main surface.

According to (11), by disposing the second protective component in an empty space of the main surface on which the receptacle is disposed, an increase in size of the second board can be prevented. Accordingly, the cost and size of the power supply unit of an aerosol generation device can be reduced.

The present application is based on the Japanese patent application (Japanese Patent Application No. 2021-079876) filed on May 10, 2021, and contents thereof are incorporated herein by reference.

### REFERENCE SIGNS LIST

1 MCU (controller)
2 charging IC
100 non-combustion inhaler (power supply unit of aerosol generation device)
161 MCU mounting board (first board)
162 receptacle mounting board (second board)
162a main surface
162b secondary surface
205 power supply line protective component (first protective component)
215 data line protective component (second protective component)
220 receptacle projection region CC1 pin (data terminal) CC2 pin (data terminal) D- pin (data terminal) D+ pin (data terminal)
DL1 data line
DL2 data line
DL3 data line
DL4 data line
BAT power supply
HTR heater
Cn heater connector
RCP receptacle
PL power supply line
V_{BUS} power supply input terminal (power supply terminal)
VBUS input terminal (input terminal)
Bat charging terminal
Fs fuse (non-ground element)
Fb ferrite bead (non-ground element)
200 EMI removing filter (ground element)
202 ESD suppressor (ground element)
203 capacitor (ground element)
204 capacitor (ground element)

## Claims

1. A power supply unit of an aerosol generation device, the power supply unit comprising:
a power supply;
a heater connector to which a heater configured to heat an aerosol source by consuming power supplied from the power supply is connected;
a controller configured to control supply of the power from the power supply to the heater connector;
a charging IC including an input terminal and a charging terminal connected to the power supply and configured to convert power input to the input terminal and output the power from the charging terminal;
a receptacle including a power supply terminal and a data terminal and electrically connected to an external power supply;
a power supply line connecting the power supply terminal and the input terminal;
a data line connecting the data terminal and the controller;
first protective components provided on the power supply line; and
a second protective component provided on the data line, wherein
the number of the first protective components is larger than the number of the second protective component.

2. The power supply unit of an aerosol generation device according to claim 1, further comprising:
a ground, wherein
the first protective components include a ground element that is an element connected to the ground, and a non-ground element that is not connected to the ground, and
the second protective component includes only one of the ground element and the non-ground element.

3. The power supply unit of an aerosol generation device according to claim 2, wherein
the second protective component includes only the ground element out of the ground element and the non-ground element.

4. The power supply unit of an aerosol generation device according to claim 2 or 3, wherein
the power supply terminal, the non-ground element, the ground element, and the input terminal are connected in this order on the power supply line.

5. The power supply unit of an aerosol generation device according to any one of claims 1 to 4, wherein the first protective components and the second protective component include the same element.

6. The power supply unit of an aerosol generation device according to any one of claims 1 to 4, wherein the first protective components and the second protective component do not include the same element.

7. The power supply unit of an aerosol generation device according to any one of claims 1 to 6, further comprising:
a first board; and
a second board separate from the first board, wherein
the controller and the charging IC are disposed on the first board, and
the receptacle is disposed on the second board.

8. The power supply unit of an aerosol generation device according to claim 7, wherein
the first protective components and the second protective component are disposed only on the second board out of the first board and the second board.

9. The power supply unit of an aerosol generation device according to claim 7 or 8, wherein
the second board has a main surface and a secondary surface that is a back surface of the main surface,
the receptacle is disposed on the main surface, and
the first protective components are disposed on the secondary surface.

10. The power supply unit of an aerosol generation device according to claim 9, wherein
at least one or more of the first protective components are disposed in a region obtained by projecting the receptacle from a direction orthogonal to the second board.

11. The power supply unit of an aerosol generation device according to claim 9 or 10, wherein the second protective component is disposed on the main surface.
